# EUROPEAN PATENT SPECIFICATION

(11) **EP 3 013 901 B1**
(45) Date of publication and mention of the grant of the patent: **04.11.2020**
(21) Application number: 13888020.8
(22) Date of filing: 28.06.2013
(51) Int. Cl.: C08L 23/10, C08L 23/12, C08L 23/08, C08L 23/16, C08K 7/14, H02S 30/10, H02S 20/30, H02S 20/24, H02S 20/10, H02S 40/42, F24S 25/632, F24S 25/13, C08K 3/32

(54) **PLASTIC PHOTOVOLTAIC MODULE FRAME AND RACK, AND COMPOSITION FOR MAKING THE SAME**
PHOTOVOLTAISCHER KUNSTSTOFFMODULRAHMEN UND GESTELL DAMIT SOWIE ZUSAMMENSETZUNG ZUR HERSTELLUNG DAVON
CADRE ET SUPPORT DE MODULE PHOTOVOLTAÏQUE EN PLASTIQUE ET COMPOSITION POUR LEUR FABRICATION

(43) Date of publication of application: 04.05.2016
(73) Proprietor: Dow Global Technologies LLC, Midland, MI 48674 (US)
(72) Inventor: WU, Shaofu, Sugar Land, Texas 77479 (US); HUO, YanLi, Shanghai 200433 (CN); GUO, Yongjin, Shanghai 200240 (CN); YAO, Wenbin, Shanghai 200135 (CN); LIN, Zhiqing, Shanghai 201316 (CN); CAI, Jie, Shanghai 201108 (CN); CHEN, Bin, Minhang District Shanghai 200240 (CN); QI, Yudong, Shanghai 201203 (CN); DU, Libo, Shanghai 201101 (CN); CHEN, Hongyu, Shanghai 201203 (CN)
(74) Representative: Boult Wade Tennant LLP
(86) International application number: PCT/CN2013/078421
(87) International publication number: WO 2014/205802

(56) References cited:
- EP-A2- 1 020 930
- WO-A2-2010/019742
- CN-A- 1 548 469
- CN-A- 102 496 640
- CN-A- 102 777 454
- CN-A- 103 102 656
- CN-A- 103 102 656
- DE-U1-212011 100 086
- US-A1- 2006 042 680
- US-A1- 2007 144 575
- US-A1- 2012 298 817
- US-B1- 7 487 771
- US-B2- 8 291 654

## Description

### FIELD OF THE INVENTION

This invention relates to photovoltaic (PV) modules and racks for mounting the same. In one aspect the invention relates to PV modules made from plastic while in another aspect, the invention relates to PV modules that are easily assembled into an array of PV modules without the need for bolts, screws or other metal fasteners. In one aspect the invention relates to a plastic composition for making PV module frames and racks.

### BACKGROUND OF THE INVENTION

Photovoltaic modules, also known as solar modules, are constructions for the direct generation of electricity from sunlight. They comprise, among other components, one or more, typically a plurality, of PV or solar cells within a frame. The frame provides mechanical support for the PV cells against mechanical forces such as wind. The frame and the racks upon which a plurality of PV modules are assembled into a PV modular array require good mechanical strength and thermal dimensional stability.

US 2007/0144575 A1 discloses a supported PV assembly comprising: a PV module comprising a PV panel; and a plurality of PV module support assemblies, at least some of the PV module support assemblies comprising: a base; and a module support, extending from the base, comprising: a support surface supporting the module; a module registration member engaging the PV module to properly position the PV module on the module support; and a mounting element securing the PV module to at least one of the base and the frame support.

Currently, aluminum is the material of choice for PV module frames and racks because of its relative low cost and high mechanical strength. However, aluminum has a number of drawbacks. Because of its conductive nature, PV modules with an aluminum frame can experience current leakage, and current leakage can degrade the conductive layer of PV cell. Moreover, aluminum PV frames (and racks) need to be grounded for safety reasons, and this can become a serious cost issue for applications with many modules, e.g., for solar farms. In addition, aluminum is heavy relative to other materials, e.g., plastics, and typically, the lighter the frame, the better.

Recently, a number of companies that manufacture PV module frames began exploring the replacement of aluminum with any one of, or combination of, various polymers such as polyamide (PA), polyphenylene ether/polystyrene (PPE/PS), polyamide/polybutylene terephthalate (PA/PBT), and polyamide/polyphenylene ether/polystyrene (PA/PPE/PS), glass fiber reinforced acrylonitrile/styrene/acrylate (ASA) (available from BASF), and polyurethane systems (available from Bayer). However, not only does the search continue for plastics useful in this application, but also for better frame and rack designs.

Aluminum frames and racks often comprise many pieces that require assembly with screws, bolts and other metal fasteners and this, in turn, can make for a slow and inefficient assembly. Junction boxes are not integrated into the frame, and thus require separate attachment. Many long power cords are frequently necessary to connect modules with one another into an array. Concrete piers or ballast is often required to secure the modules or an array of modules to a base. These and other considerations drive a desire for not only a nonmetal material for PV module frames and racks, but also for better PV module frame and rack designs.

### SUMMARY OF THE INVENTION

In one embodiment the invention is a solar panel assembly comprising a:
(A) (A) PV module comprising one or more PV cells within a plastic frame, and the frame comprising plastic front and rear base attachments, the front base attachments pivotally attached to the frame of the PV module and the rear base attachments slideably engaged with the frame of the PV module;
(B) Plastic base comprising two spaced apart mounting bases joined together by a connector board, each mounting base equipped with plastic front pegs to pivotally engage the front base attachments of the frame of the PV module, and rear slots engaged in a snap-fit relationship with the rear base attachments of the PV module;
(C) Plastic wind deflector engaged in a snap-fit relationship with each of the two rear base attachments;
(D) Plastic junction box integral with the PV module frame; and
(E) Two plastic self-aligning devices for joining adjacent PV modules to one another, each device integral with the PV module frame.

### BRIEF DESCRIPTION OF THE DRAWINGS

Figures 1A and 1B illustrate two conventional, rack-mounted solar panel arrays.
Figures 1C and 1D illustrate conventional rack configurations upon which the solar panel arrays of Figures 1A-B are attached.
Figure 1E illustrates one conventional metal fastener by which a solar panel is attached to a rack.
Figures 2A and 2B illustrate the front and back, respectively, of a conventional solar panel.
Figures 2C and 2D illustrate the metal screws and metal corner inserts, respectively, used to construct the metal frame of the solar panel of Figures 2A-B.
Figure 2E illustrates the grounding assembly of the solar panel of Figures 2A-B.
Figure 3A is an exploded view of one embodiment of a solar panel assembly and its supporting base of this invention.
Figure 3B is an illustration of an integrated or seamed junction box of the solar panel assembly of Figure 3A.
Figure 3C is an illustration of an integrated electrical port of the solar panel assembly of Figure 3A.
Figures 3D-E further illustrates mounting bases 38A-B of Figure 3A.
Figure 3F illustrates the engagement of the solar panel to the mounting base.
Figure 3G illustrates the engagement of the frame base rear elevation with the rear base attachment.
Figure 3H illustrates the engagement of the rear base attachments to the solar panel assembly frame.
Figure 3I illustrates the engagement of the wind deflector with the rear base attachments.
Figure 3J illustrates two solar panel assemblies with their supporting racks positioned together into an array.
Figure 4A illustrates a PV module comprising an L-shaped frame, junction boxes, self-aligning devices, and structural beams.
Figures 4B and 4C illustrate the coupling of an aligning device on one PV module with an aligning device of an adjoining module.
Figure 4D illustrates the positioning of the structural beams on the backside of a photovoltaic array.
Figures 5A, 5B, 5C and 5D illustrate a PV module frame comprising a (i) back sheet with an integrated junction box, and (ii) crossblock.
Figures 5E-F illustrate outside and inside views, respectively, of a corner connector.
Figure 5G provides a cut-away view of a corner connector engaged with an edge frame and laminated solar panel.
Figures 5H-J illustrates the installment of a solar panel array onto a roof top or similar structure.
Figures 6A-B illustrate a PV module with a (i) front side that comprises four frame sections and a solar cell array, and, (ii) rear side that comprises four frame sections and four corner connectors, respectively.
Figures 6C and 6D illustrate a corner connector.
Figure 6E illustrates a frame with a cut-out that corresponds in size and shape to a tab on the corner connector.
Figures 6F, 6G and 6H illustrate the manner in which a corner connector couples or joins two sections of a PV module frame.
Figure 6I illustrates the welding of two frame sections together once joined by a corner connector.
Figures 7A and 7B illustrate an integrated PV module having a hinge and snap-fit construction.
Figures 7C-D are schematics of an open and closed, respectively, frame/cover snap-fit.
Figures 7E-F are schematics of an alternate open and closed, respectively, frame/cover snap-fit to the embodiment of Figures 7C-D.
Figures 8A, 8B and 8C illustrate a blow-molded PV module with an integrated back sheet and junction box.
Figures 9A-F show the steps in one embodiment of a process in which a solar panel is over-molded with a plastic frame.
Figure 10A shows a PV module with extended rack legs attached to a frame by hinges.
Figure 10B shows the PV module of Figure 10A with the rack legs folded back against the rear side of the module.
Figures 10C-D show rack legs folded into channels of the module frame.
Figure 10E shows the extended legs of a PV module locked into place with side arms.
Figure 10F shows the rear rack legs of a PV module with telescopic functionality to allow module height adjustment.
Figure 11A shows an exploded view of one embodiment of a PV module of this invention.
Figure 11B shows the PV module of Figures 11A in assembled form.
Figure 11C shows one embodiment of the snap closure of the PV module of Figures 11A-B.
Figure 12 illustrates a PV module with chimney vents.

### DETAILED DESCRIPTION OF THE PREFERRED EMBODIMENT

### Definitions

Unless stated to the contrary, implicit from the context, or customary in the art, all parts and percentages are by weight. For purposes of United States patent practice, the contents of any referenced patent, patent application or publication are incorporated by reference in their entirety (or its equivalent U.S. version is so incorporated by reference) especially with respect to the disclosure of synthetic techniques, definitions (to the extent not inconsistent with any definitions specifically provided in this disclosure), and general knowledge in the art.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, viscosity, melt index, etc., is from 100 to 1,000, it is intended that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the relative amounts of the various components in the composition from which the PV module frame and racks are manufactured.

"Comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

### Plastic Composition

A composition can be provided comprising (A) a thermoplastic polymer, (B) a reinforcing element, (C) a non-halogen containing, intumescent flame retardant, (D) an impact-modifier, (E) a coupling agent, and, optionally, (F) one or more additives. A composition can comprise, based on the weight of the composition, (A) 10-80 wt% of a thermoplastic polymer, (B) 10-55 wt% of a reinforcing element, (C) 1-30 wt% of a non-halogen containing, intumescent flame retardant, (D) 1-20 wt% of an impact-modifier, (E) 0.001-0.5 wt% of a coupling agent, and, optionally, (F) one or more additives.

A photovoltaic (PV) frame, PV rack, or PV frame or PV rack component can be provided, made from a composition comprising (A) a thermoplastic polymer, particularly a thermoplastic polyolefin (TPO), (B) a reinforcing element, particularly glass fiber, (C) a non-halogen containing, intumescent flame retardant, (D) an impact-modifier, particularly a polyolefin elastomer that is not the thermoplastic polymer of (A), (E) a coupling agent, and, optionally, (F) one or more additives such as an antioxidant, UV-stabilizer, etc. A photovoltaic (PV) frame, PV rack, or PV frame or PV rack component made from a composition can comprise based on the weight of the composition, (A) 10-80 wt% of a thermoplastic polymer, (B) 10-55 wt% of a reinforcing element, (C) 1-30 wt% of a non-halogen containing, intumescent flame retardant, (D) 1-20 wt% of an impact-modifier, (E) 0.001-0.5 wt% of a coupling agent, and, optionally, (F) one or more additives.

Nonlimiting examples of suitable thermoplastic polymers include, but are not limited to, olefin-based polymers, polyamides, polycarbonates, polyesters, thermoplastic polyurethanes, thermoplastic polyesters, polystyrenes, high impact polystyrenes, polyphenylene oxides, and any combination thereof. In one embodiment, the thermoplastic polymer is a halogen-free polymer. As here used "halogen-free" means the absence of a halogen other than that which may be present as a contaminant.

In one embodiment the thermoplastic polymer is an olefin-based polymer. As used herein, an "olefin-based polymer" is a polymer containing, in polymerized form, an olefin, for example ethylene or propylene. The olefin-based polymer may contain a majority weight percent of the polymerized form of the olefin based on the total weight of the polymer. Nonlimiting examples of olefin-based polymers include ethylene-based polymers and propylene-based polymers. In one embodiment the olefin-based polymer is an ethylene-based polymer. Nonlimiting examples of suitable ethylene-based polymers include ethylene/α-olefin copolymers (ethylene/propylene copolymer, ethylene/butene copolymer, ethylene/octene copolymer), ethylene/(acrylic acid)copolymer, ethylene/methylacrylate copolymer, ethylene/ethylacrylate copolymer, ethylene/vinyl acetate copolymer, ethylene/propylene/diene copolymer, and any combination thereof. In one embodiment the olefin-based polymer is a propylene-based polymer. Nonlimiting examples of suitable propylene-based polymers include propylene homopolymers and propylene copolymers including impact-modified polypropylene (IPP). The thermoplastic polymer provides flexibility, solvent resistance, thermal stability and/or mechanical strength to the final composition.

In one embodiment the thermoplastic polymer is an ethylene/α-olefin copolymer, an olefin block ethylene/α-olefin copolymer, or a combination thereof. In one embodiment the thermoplastic polymer is an ethylene/butene copolymer. In one embodiment the thermoplastic polymer is an olefin block ethylene/butene copolymer.

In one embodiment the thermoplastic polymer is an IPP. Impact-modified polypropylene is a known polymer and comprises at least two major components, Component A and Component B. Component A is preferably an isotactic propylene homopolymer, though small amounts of a comonomer may be used to obtain particular properties. Typically such copolymers of Component A contain 10% by weight or less, preferably less than 6% by weight or less, comonomer such as ethylene, butene, hexene or octene. Most preferably less than 4% by weight ethylene is used. The end result is usually a product with lower stiffness but with some gain in impact strength compared to homopolymer Component A.

As here used Component A refers generally to the xylene insoluble portion of the IPP composition, and Component B refers generally to the xylene soluble portion. Where the xylene soluble portion clearly has both a high molecular weight component and a low molecular weight component, the low molecular weight component is attributable to amorphous, low molecular weight propylene homopolymer. Therefore, Component B in such circumstances refers only the high molecular weight portion.

Component B is most preferably a copolymer consisting essentially of propylene and ethylene although other propylene copolymers, ethylene copolymers or terpolymers may be suitable depending on the particular product properties desired. For example, propylene/butene, hexene or octene copolymers, and ethylene/butene, hexene or octene copolymers may be used, and propylene/ethylene/hexene-1 terpolymers may be used. In a preferred embodiment though, Component B is a copolymer comprising at least 40% by weight propylene, more preferably from 80% by weight to 30% by weight propylene, even more preferably from 70% by weight to 35% by weight propylene. The comonomer content of Component B is preferably in the range of from 20% to 70% by weight comonomer, more preferably from 30% to 65% by weight comonomer, even more preferably from 35% to 60% by weight comonomer. Most preferably Component B consists essentially of propylene and from 20% to 70% ethylene, more preferably from 30% to 65% ethylene, and most preferably from 35% to 60% ethylene.

In one embodiment the thermoplastic polymer typically comprises from 10 to 80, more typically from 25 to 70, weight percent (wt%) of the composition.

Nonlimiting examples of suitable reinforcing elements include, but are not limited to, glass fibers, carbon fibers, talc, calcium carbonate, organoclay, marble dust, cement dust, feldspar, silica or glass, fumed silica, silicates, alumina, ammonium bromide, antimony trioxide, antimony trioxide, zinc oxide, zinc borate, barium sulfate, silicones, aluminum silicate, calcium silicate, titanium oxides, glass microspheres, chalk, mica, clays, wollastonite, ammonium octamolybdate, intumescent compounds, expandable graphite, and mixtures thereof. The reinforcing elements may contain various surface coatings or treatments, such as silane, fatty acids, and the like. Glass fiber, particularly long glass fiber, is the preferred reinforcing element.

In one embodiment the reinforcing element typically comprises from 10 to 55, more typically from 25 to 40, weight percent (wt%) of the composition.

In one embodiment the non-halogen containing, intumescent flame retardant (FR) system used in the practice of this invention comprises one or more organic phosphorus-based and/or nitrogen-based intumescent FR, optionally including a piperazine component. In one embodiment the non-halogen containing, intumescent FR system typically comprises from 1 to 30, more typically from 5 to 25, weight percent (wt%) of the composition.

In one embodiment the non-halogen containing, intumescent FR system comprises at least 1, 10, 15, 20 and most preferably at least 30 wt% of an organic nitrogen/phosphorus-based compound. The typical maximum amount of the organic nitrogen/phosphorus-based compound does not exceed 70, 60, 50, and more preferably does not exceed 45, wt% of the non-halogen containing, intumescent FR system.

In an embodiment the non-halogen containing, intumescent FR system comprises 30-99 wt% of a piperazine based compound. The preferred amount of the piperazine based compound is at least 30, 40, and at least 50, wt%. In particular embodiments the FR system can comprise 55-65 wt% of a piperazine based compound and 35-45 wt% of one or more other flame retardants (e.g., an organic nitrogen/phosphorus-based compound).

Nonlimiting examples of suitable non-halogen containing, intumescent flame retardants include, but are not limited to, organic phosphonic acids, phosphonates, phosphinates, phosphonites, phosphinites, phosphine oxides, phosphines, phosphites or phosphates, phosphonitrilic chloride, phosphorus ester amides, phosphoric acid amides, phosphonic acid amides, phosphinic acid amides, and melamine and melamine derivatives, including melamine polyphosphate, melamine pyrophosphate and melamine cyanurate, and mixtures of two or more of these materials. Examples include phenylbisdodecyl phosphate, phenylbisneopentyl phosphate, phenyl ethylene hydrogen phosphate, phenyl-bis-3,5,5'-trimethylhexyl phosphate), ethyldiphenyl phosphate, 2-ethylhexyl di(p-tolyl) phosphate, diphenyl hydrogen phosphate, bis(2-ethyl-hexyl) p-tolylphosphate, tritolyl phosphate, bis(2-ethylhexyl)-phenyl phosphate, tri(nonylphenyl) phosphate, phenylmethyl hydrogen phosphate, di(dodecyl) p-tolyl phosphate, tricresyl phosphate, triphenyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, and diphenyl hydrogen phosphate. Phosphoric acid esters of the type described in USP 6,404,971 are examples of phosphorus-based FRs. Additional examples include liquid phosphates such as bisphenol A diphosphate (BAPP) (Adeka Palmarole) and/or resorcinol bis(diphenyl phosphate) (Fyroflex RDP) (Supresta, ICI), and solid phosphorus such as ammonium polyphosphate (APP), piperazine pyrophosphate, piperazine orthophosphate and piperazine polyphosphate. APP is often used with flame retardant co-additives, such as melamine derivatives. Also useful is Melafine (DSM) (2,4,6-triamino-1,3,5-triazine; fine grind melamine).

Examples of the optional piperazine components of the FR system include compounds such as piperazine pyrophosphate, piperazine orthophosphate and piperazine polyphosphate. Additional examples include polytriazinyl compounds or oligomer or polymer 1,3,5-triazine derivatives including a piperazine group, as described in US 2009/0281215 and WO 2009/016129.

Impact modifiers are materials added to a substance to improve the resistance of the substance to deformation and/or breaking. In the context of improving the resistance of plastic to deformation and/or breading, non-limiting examples of impact modifiers includes natural and synthetic rubbers (e.g., ethylene propylene rubbers (EPR or EPDM)), ethylene vinyl acetate (EVA), styrene-block copolymers (SBC), poly vinyl chloride (PVC) and polyolefin elastomers (POE).

While any elastomeric polyolefin can be used, preferred elastomeric polyolefins are made with a single site catalyst, such as a metallocene catalyst or constrained geometry catalyst, typically have a melting point of less than 95, preferably less than 90, more preferably less than 85, even more preferably less than 80 and still more preferably less than 75, °C.

The elastomeric polyolefin copolymers include ethylene/α-olefin interpolymers having an α-olefin content of between 15, preferably at least 20 and even more preferably at least 25, wt% based on the weight of the interpolymer. These interpolymers typically have an α-olefin content of less than 50, preferably less than 45, more preferably less than 40 and even more preferably less than 35, wt% based on the weight of the interpolymer. The α-olefin content is measured by ¹³C nuclear magnetic resonance (NMR) spectroscopy using the procedure described in Randall (Rev. Macromol. Chem. Phys., C29 (2&3)). Generally, the greater the α-olefin content of the interpolymer, the lower the density and the more amorphous the interpolymer, and this translates into desirable physical and chemical properties as an impact modifier.

The α-olefin is preferably a C₃₋₂₀ linear, branched or cyclic α-olefin. The term interpolymer refers to a polymer made from at least two monomers. It includes, for example, copolymers, terpolymers and tetrapolymers. Examples of C₃₋₂₀ α-olefins include propene, 1-butene, 4-methyl-1-pentene, 1-hexene, 1-octene, 1-decene, 1-dodecene, 1-tetradecene, 1-hexadecene, and 1-octadecene. The α-olefins also can contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, certain cyclic olefins, such as norbornene and related olefins, particularly 5-ethylidene-2-norbornene, are α-olefins and can be used in place of some or all of the α-olefins described above. Similarly, styrene and its related olefins (for example, α-methylstyrene, etc.) are α-olefins for purposes of this invention. Illustrative polyolefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, ethylene/propylene/diene monomer (EPDM) and ethylene/butene/styrene. The copolymers can be random or blocky.

The elastomeric polyolefin have a glass transition temperature (Tg) of less than -20, preferably less than -40, more preferably less than -50 and even more preferably less than -60, C as measured by differential scanning calorimetry (DSC) using the procedure of ASTM D-3418-03. Moreover, typically the elastomeric polyolefin copolymers used in the practice of this invention also have a melt index (as measured by ASTM D-1238 (190°C/2.16 kg)) of less than 100, preferably less than 75, more preferably less than 50 and even more preferably less than 35, g/10 minutes. The typical minimum MI is 1, and more typically it is 5.

More specific examples of elastomeric olefinic interpolymers include very low density polyethylene (VLDPE) (e.g., FLEXOMER ethylene/1-hexene polyethylene made by The Dow Chemical Company), homogeneously branched, linear ethylene/α-olefin copolymers (e.g. TAFMER by Mitsui Petrochemicals Company Limited and EXACT by Exxon Chemical Company), and homogeneously branched, substantially linear ethylene/α-olefin polymers (e.g., AFFINITY and ENGAGE polyethylene available from The Dow Chemical Company). The more preferred elastomeric polyolefin copolymers are the homogeneously branched linear and substantially linear ethylene copolymers. The substantially linear ethylene copolymers are especially preferred, and are more fully described in USP 5,272,236, 5,278,272 and 5,986,028.

While the thermoplastic polymer (the A component of the composition) and the impact modifier (the D component of the composition) can both be a polyolefin elastomer, they are never the same polyolefin elastomer in any given composition. In other words, if the thermoplastic polymer is an ethylene-propylene copolymer, then the impact modifier is something other than an ethylene-propylene copolymer, e.g., an ethylene-butene copolymer, or an ethylene-octene copolymer, or an EPDM, etc. In one embodiment, the composition comprises an IPP as the thermoplastic polymer (component A) and a substantially linear ethylene copolymer, e.g., an ENGAGE elastomer, as the impact modifier (component D).

In one embodiment the impact modifier typically comprises from 1 to 20, more typically from 5 to 15, wt% of the composition.

In one embodiment the coupling agents used in the composition include, but are not limited to, bis(sulfonyl azide) (BSA), ethylene vinyl acetate (EVA) copolymer (e.g., ELVAX 40L-03 (40%VA, 3MI) by DuPont), and aminated olefin block copolymers (e.g., INFUSE 9807 by The Dow Chemical Company). Examples of other coupling agents include polysiloxane containing vinyl and ethoxy groups (e.g., DYNASYLAN 6498 (oligomeric vinyl silane)) and hydroxy-terminated dimethylsiloxane (<0.1 vinyl acetate). In one embodiment the coupling agent typically comprises from 0.001 to 0.5 wt% of the composition.

The compositions can incorporate one or more stabilizers and/or additives such as, but not limited to, antioxidants (e.g., hindered phenols such as IRGANOX™ 1010 (Ciba/BASF)), thermal (melt processing) stabilizers, hydrolytic stability enhancers, heat stabilizers, acid scavengers, colorants or pigments, UV stabilizers, UV absorbers, nucleating agents, processing aids (such as oils, organic acids such as stearic acid, metal salts of organic acids), antistatic agents, smoke suppressants, anti-dripping agents, tougheners, plasticizers (such as dioctylphthalate or epoxidized soy bean oil), lubricants, emulsifiers, optical brighteners, silanes (in free form or as filler surface modifier), cement, urea, polyalcohols like pentaerythritol, minerals, peroxides, light stabilizers (such as hindered amines), mold release agents, waxes (such as polyethylene waxes), viscosity modifiers, charring agents (e.g., pentaerythritol), and other additives, to the extent that these additives do not interfere with the desired physical or mechanical properties of the articles made from the compositions of the present invention. If present, then these additives are used in known amounts and in known ways, but typically the additive, or package of additives, comprises greater than zero, e.g., 0.01, to 2, more typically 0.1 to 1, wt% of the final composition. Examples of useful viscosity modifiers include polyether polyols such as VORANOL 3010 and VORANOL 222-029, available from The Dow Chemical Company). Useful commercially available anti-dripping agents include triglycidyl isocyanurate(TGIC), VIKOFLEX 7010 (methyl epoxy soyate (epoxidized ester family)), and VIKOLOX alpha olefin epoxy (C-16) (mixture of 1,2-epoxyhexadecane (> 95 wt%) and 1-hexadecene (< 5 wt%), both available from eFAME. A useful dispersant/metal chelater is n-octylphosphonic Acid (UNIPLEX OPA).

Compounding of the compositions can be performed by standard means known to those skilled in the art. Examples of compounding equipment are internal batch mixers, e.g., BANBURY or BOLLING internal mixer. Alternatively, continuous single or twin screw mixers can be used, e.g., FARREL continuous mixer, WERNER and PFLEIDERER twin screw mixer, or BUSS kneading continuous extruder. The type of mixer utilized, and the operating conditions of the mixer, will affect properties of the composition such as viscosity, volume resistivity, and extruded surface smoothness. The compounding temperature of the polymer blend with the FR and optional additive packages is typically from 120° to 220°C, more typically from 160° to 200°C. The various components of the final composition can be added to and compounded with one another in any order, or simultaneously, but typically a compatibilizers (if included) is first compounded with the IPP and the thermoplastic polymer is first compounded with one or more of the components of the FR package, and the two mixtures with any remaining components of the FR package and any additives are compounded with one another. In some embodiments, the additives are added as a pre-mixed masterbatch, which are commonly formed by dispersing the additives, either separately or together, into an inert plastic resin, e.g., one of the IPP or thermoplastic polymer. Masterbatches are conveniently formed by melt compounding methods.

### PV Module and Rack

The following drawings illustrate various embodiments of the prior art and the invention. Like components and parts are like numbered throughout the drawings.

### Prior Art

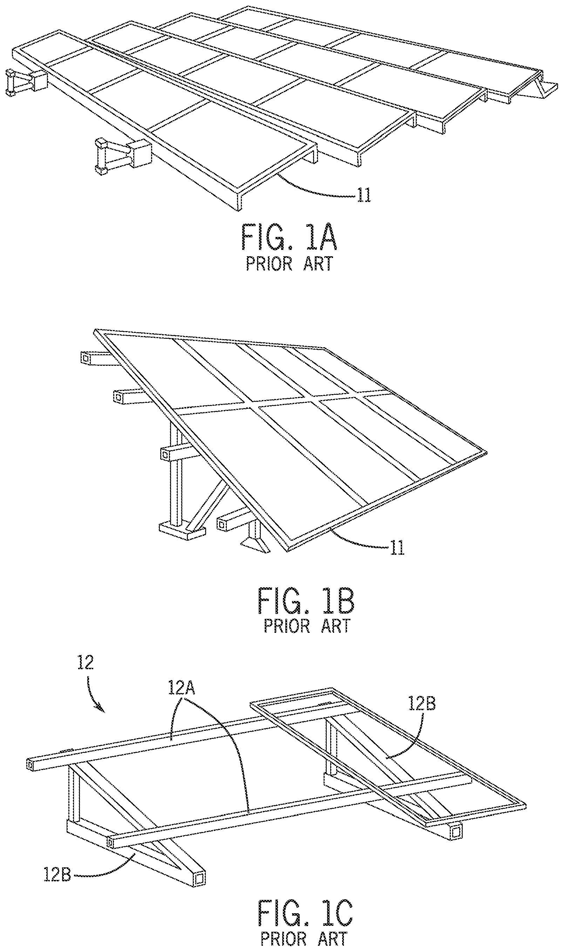

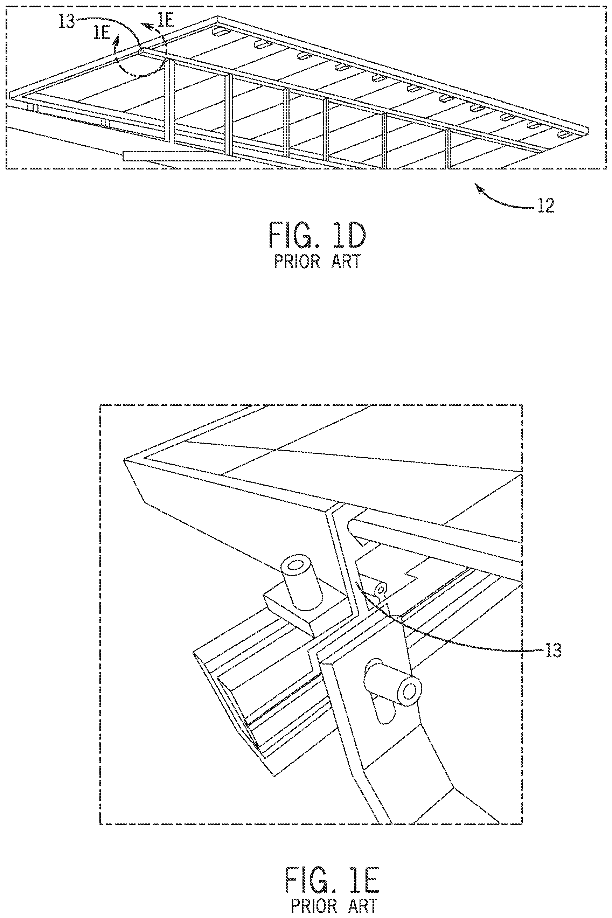

Figures 1A and 1B illustrate two conventional, prior art solar panel arrays. In each illustration a multiple of solar panels 11 are attached to array rack or frame 12 (shown in Figures 1C and ID) in a grid configuration. Array rack 12 comprises metal, typically aluminum, cross-supports 12a and metal, typically aluminum, trusses 12b assembled in a manner to receive and hold a plurality of solar panels 11. The solar panels are attached to rack 12 in any conventional manner, typically by a plurality of metal fasteners 13 as illustrated in Figure IE. Other means of fastening the solar panels to the array rack include nuts and bolts, and welding (neither shown). Each solar panel requires leveling at the time it is attached to the array rack to insure alignment with the other attached solar panels and since the array rack is mostly, if not all, metal, it requires grounding (not shown). If the array rack is placed upon a roof, then ballast (not shown) is typically required to hold it in place. If the array rack is placed upon the ground, then typically a concrete or metal pier is also required.

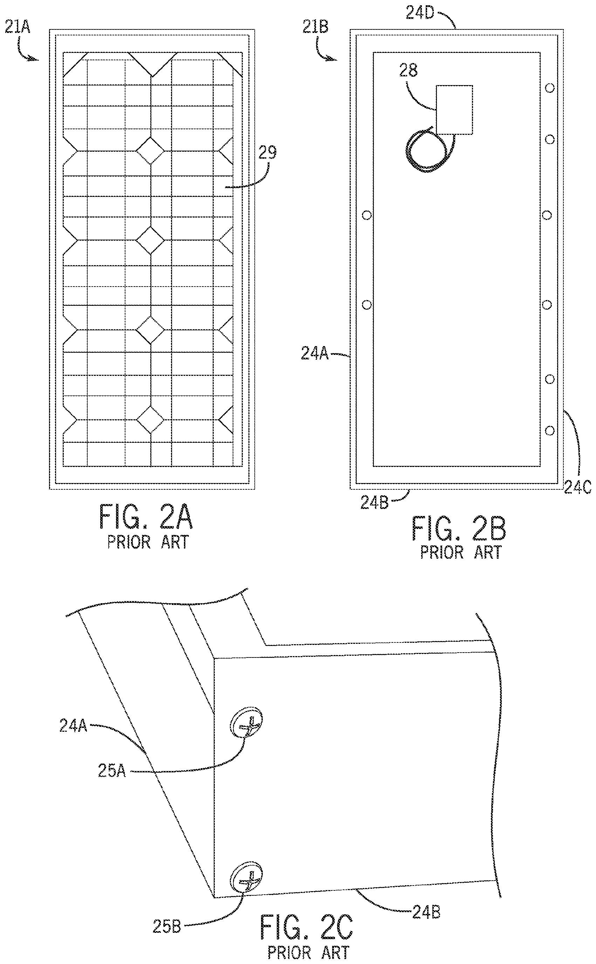

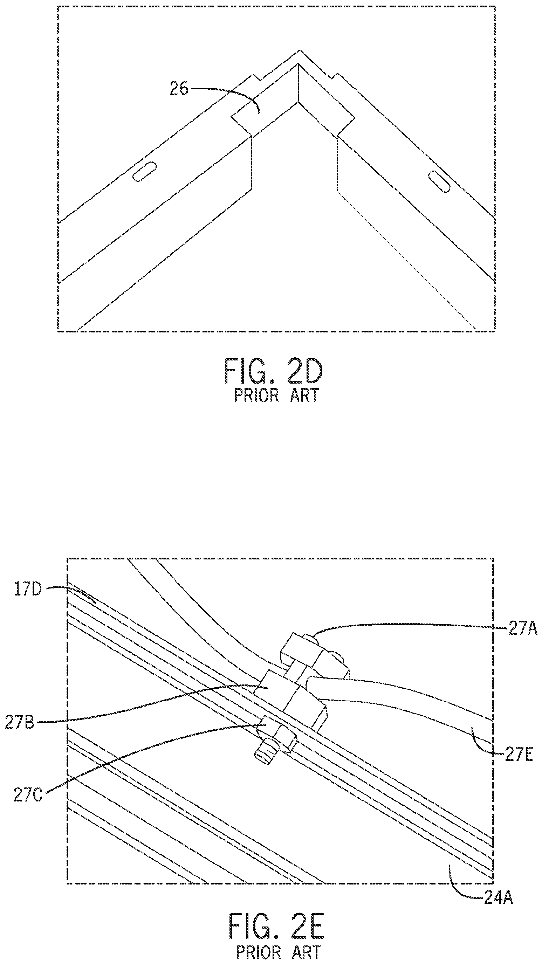

Figures 2A and 2B illustrate front 21A and back 21B, respectively, of solar panel 21. Solar panel 21 comprises metal, typically aluminum, frame parts 24A-D which are joined at the corners either with metal screws 25A-B as illustrated in Figure 2C or by metal corner insert 26 as illustrated in Figure 2D. Since the solar panel framework is metal, it, like the metal array rack, also requires grounding as illustrated in Figure 2E with grounding bolt 27A, grounding nuts 27B-C, and grounding wires 27D-E attached to frame part 24A. On the back of solar panel 21B is attached junction box 28 (Figure 2B) which collects the electricity generated by photovoltaic cells 29 (Figure 2A) for transfer to an end-use application or electrical grid.

### First Embodiment: PV Module and Rack

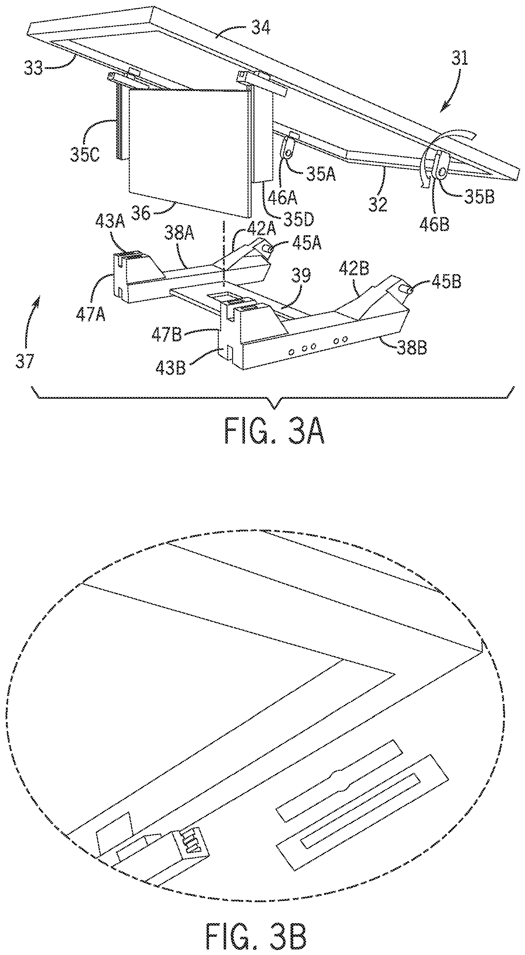

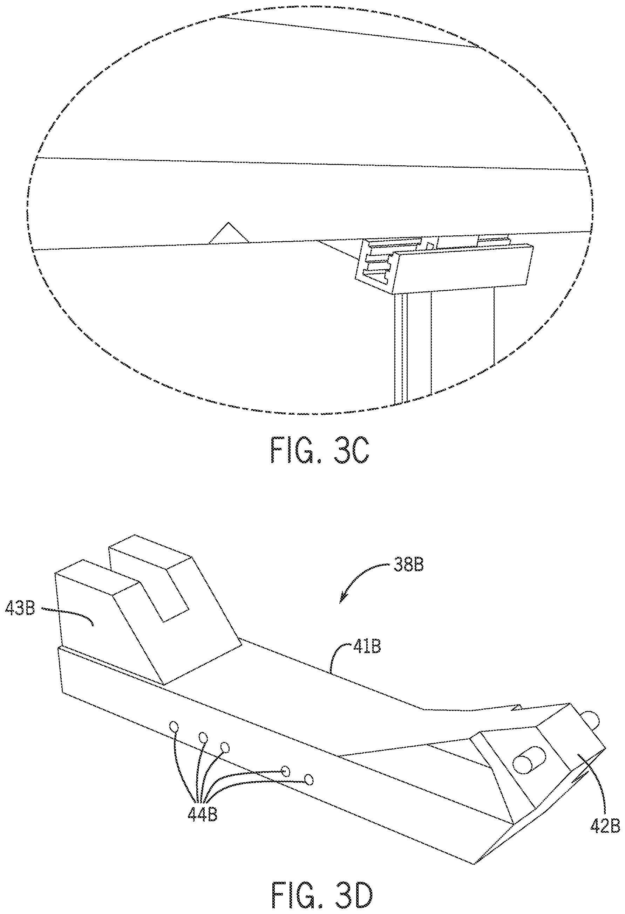

Figure 3A is an exploded view of one embodiment of a solar panel assembly and its supporting base of this invention. Solar panel assembly 31 comprises photovoltaic array 32 (seen from the backside), integrated or seamed junction box 33 (Figure 3B), electrical port 34 (Figure 3C), front base attachments 35A and 35B, rear base attachments 35C and 35D, and wind deflector 36. The front and rear base attachments can fold flat against the back of the photovoltaic array, and the front base attachments are typically shorter, typically more than 50% shorter, than the rear base attachments. Supporting rack 37 comprises supporting mounting bases 38A and 38B which are joined to one another by middle connector board 39.

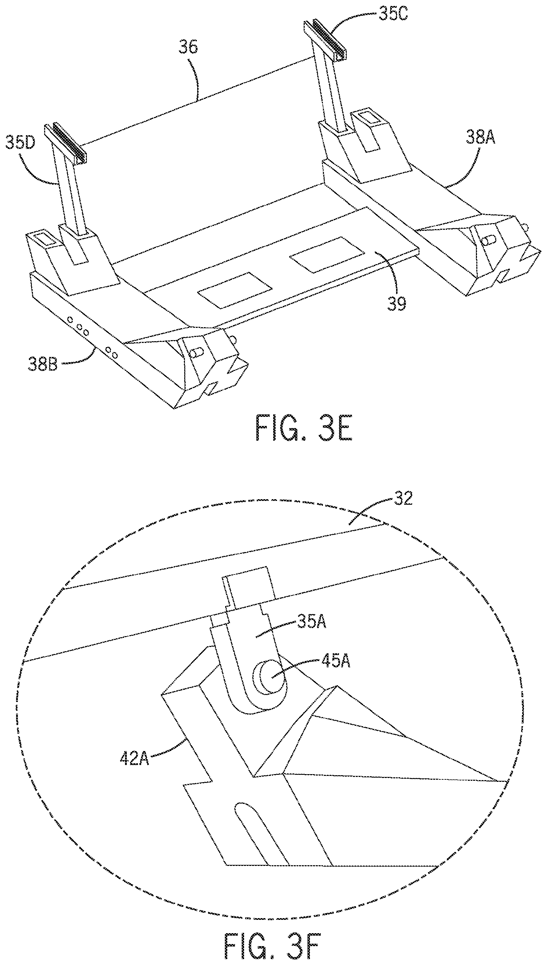

Figure 3D further illustrates mounting base 38B as comprising frame base 41B with front elevation 42B and rear elevation 43B. Frame base 41B is equipped with holes 44B sized and shaped to receive in a snap-fit relationship the pegs (not shown) of middle connector board 39 so as to enable the joining of mounting bases 38A and 38B as shown in Figures 3A and 3E. Frame base front elevation 42B is equipped with peg 45B to engage hole 46B in front base attachment 35B. Frame base front elevation 42A is designed in a like manner to frame base front elevation 42B so as to both support solar panel assembly 31 and to allow it to pivot about pegs 45A and 45B. The engagement of hole 35A and peg 45A is illustrated in Figure 3F.

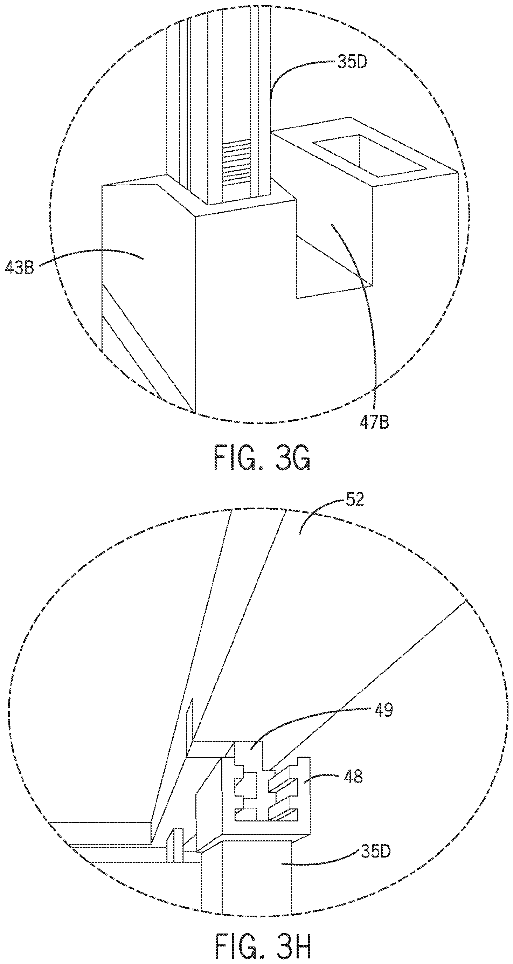

As shown in Figure 3G, frame base rear elevation 43B comprises slot 47B which is sized and shaped to receive in a snap-fit relationship rear base attachment 35D. Frame base rear elevation 43A is designed in a similar manner to rear frame base elevation 43B so as to both support solar panel assembly 31 and to allow it to pivot about pegs 45A and 45B. With respect to this pivot feature, rear base attachments 35C and 35D engage the frame of solar panel assembly 31 in a manner that allows the panel to slide over these rear base attachments as the front base attachments rotate about pegs 45A and 45B. The engagement of the rear base attachments to the solar panel assembly frame is illustrated in Figure 3H. Rear base attachment 35D comprises crown 48 sized and shaped to glidingly receive slider 49 which is affixed to solar panel assembly frame 52. This combination of pivoting and sliding of the solar panel assembly eliminates the need for leveling of the panel relative to other panels in the array, and allows an easy response to wind and other forces that may disrupt the installation alignment.

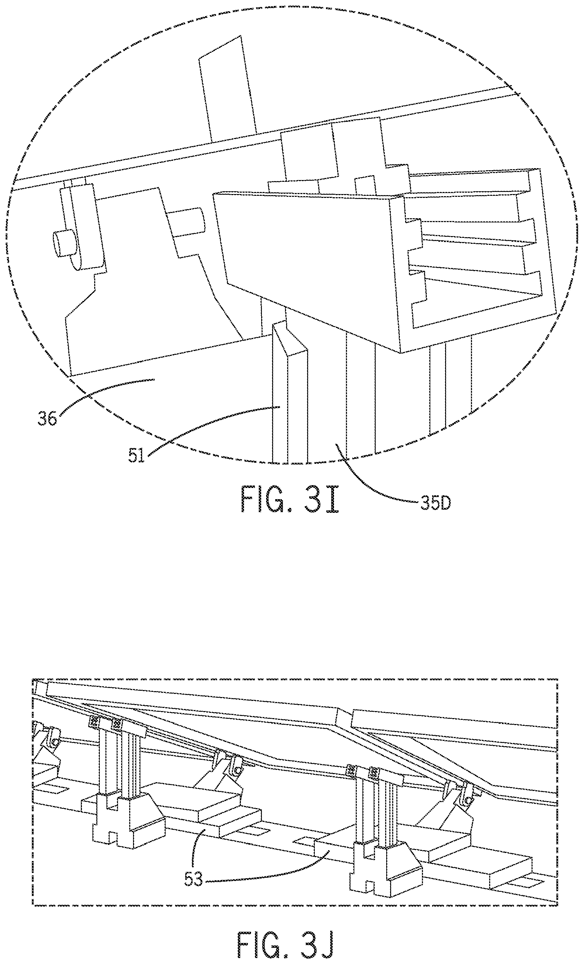

Rear base attachments 35C and 35D also comprise slots to receive and hold the height edges of wind deflector 36. This is illustrated in Figure 3I with the engagement of a height edge of wind deflector 36 with slot 51 of rear base attachment 35D.

Figure 3J illustrates two solar panel assemblies with their supporting racks positioned together into an array. The assemblies and racks are held in position with ballast 53 that is placed over adjoining frame bases.

### Second Embodiment: PV Module and Rack

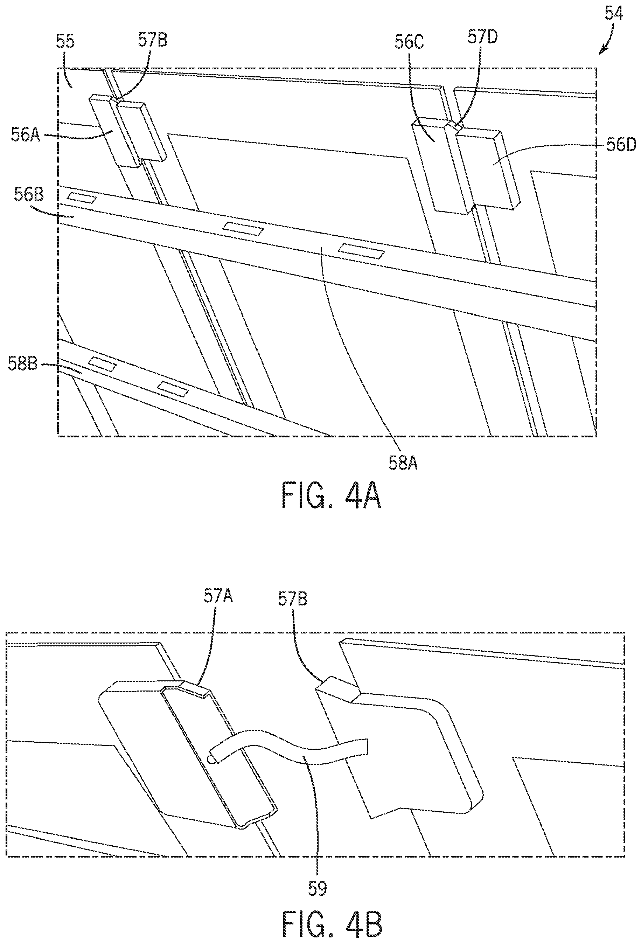

In one embodiment of the invention, the PV module frame is characterized by one or more of the following features: (A) a single molded or over-molded part, (B) an L-shape, (C) a two-piece junction box with one piece located on one side of the frame and the other piece located opposite and on the other side of the frame; (D) no observable wire on the backside of the panel (from the perspective of looking at the front side of the panel), (E) a self-alignment device, and (F) at least one structural member on the back of the panel to provide mechanical strength to the panel. In one embodiment the PV module of this invention is characterized by two, or three, or four, or five, or all six of these features which are more fully described in Figures 4A-D.

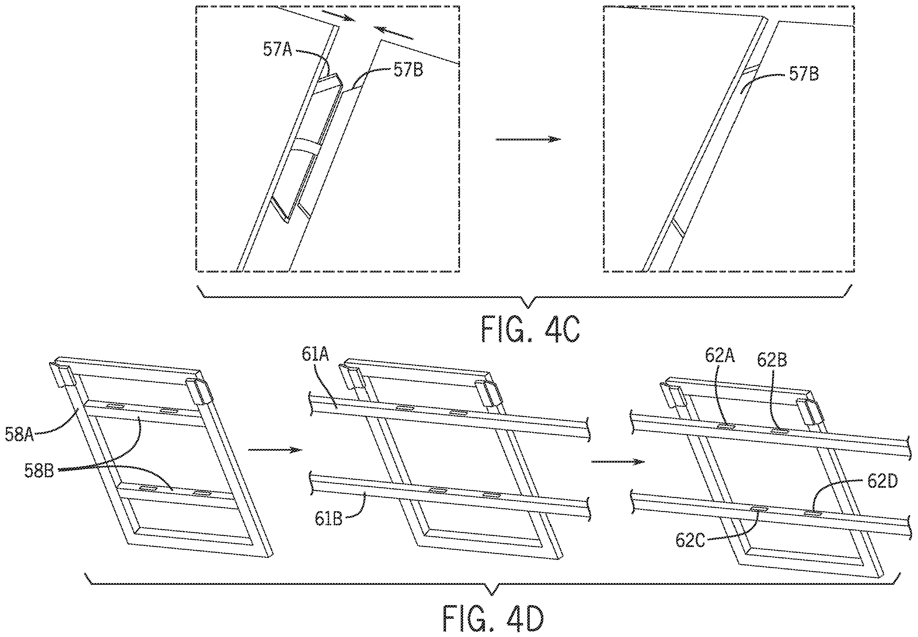

In Figure 4A PV module 54 comprises L-shaped frame 55, junction boxes 56A-D, self-aligning devices 57A-D (only 57B and 57D are shown), and structural beams 58A-B. The junction boxes and self-aligning devices are integrated into the semi-frame, e.g., are part of the molded semi-frame. One junction box moves electricity into the module, and the other junction box moves electricity out of the module. As shown in Figures 4B and 4C, the aligning device of one module is coupled to the aligning device of an adjoining module. One aligning device, e.g., 57A, is equipped with a female end while the other alignment device, e.g., 57B, is equipped with a male end. The devices are positioned on each module such that the female aligning device of one module is opposite the male aligning device of the adjacent module. The male and female aligning devices are sized and shaped to allow for a snap-fit union which, when fitted together, lock the adjacent modules to one another and in the desired alignment. When the aligning devices are locked together, they shield the short wire, e.g., 59 in Figure 4B, that connects one junction box of one module to one junction box of the adjoining module.

PV module 54 is also equipped with structural beams 58A and 58B. In one embodiment the PV module is equipped with one beam. In another embodiment the PV module is equipped with more than two beams. In one embodiment the PV module is without a beam. The structural beams, when present, provide mechanical strength to the photovoltaic array.

As shown in Figure 4D, the structural beams are positioned on the backside of the photovoltaic array and within the long edges of the module. These structural beams are sized and shaped to engage rails 61A and 61B, respectively, so that beams 58A and 58B slide over or within rails 61A and 61B. Both structural beams 58A-B and rails 61A-B are typically tubular and comprising apertures which, when aligned one over the other, allow for the insertion of pin or other locking device 62A-D into both structures thus locking one to another in a fixed position. The rails typically have a C-shape, i.e., one-side of the rail is open to receive the structural beam but the opening is sized such that the beam must be inserted or removed from a rail end, not from a region between the rail ends. This feature reduces or eliminates the need for screws, bolts and the like for attaching the PV module to an array rack or other frame and with the self-aligning devices and integrated junction boxes, reduces assembly time and effort.

Assembly of the frame is quick and simple. The L-shaped frame is laid on a flat surface with the open side up, i.e., one leg of the L flat on the surface and the other leg of the L extending perpendicularly upward. A sealer is applied to the inside of the frame and/or the edges of the photovoltaic array panel, and then the panel is inserted into the open frame such the sealer is between the panel edges and the frame. The sealer is then allowed to cure so that the panel is securely affixed to the frame.

The structural beams are then inserted and affixed to the frame by any convenient method, e.g., mechanical fastener, compression fit, adhesive, etc., and the assembled module is then slid onto the rails. The modules are snap-fitted together using the aligning devices, the junction boxes coupled with either a soft wire, e.g., 49 in Figure 4B, or snapped fitted together if the junctions boxes are equipped with such a connection (not shown), and the PV module is then fixed to the rails with snap pins.

The L-shaped frame allows for the construction of a PV module with a smaller footprint (e.g., 2.5% or more) because less space is needed between the edge of the photovoltaic array and the frame. This reduces the modules weight and cost of construction.

### Third Embodiment: PV Module and Anchor Blocks

In one embodiment of the invention, the PV module frame comprises a (i) back sheet, preferably with an integrated junction box, and (ii) four straight side frame segments joined together into a rectangular configuration by four corner connectors. The back sheet can be laminated with solar cell layers. The PV modules can be fixed into an array through the use of cross anchor blocks.

The PV module, frame and/or anchor blocks are characterized by one or more of the following features:
(A) The module comprises (1) a back support, (2) a front support, (3) an absorber layer between the front support and the back support, and (4) a frame surrounding the back and front supports and the absorber layer, the frame comprising four straight side segments joined together into a rectangular configuration by four corner connectors;
(B) Cross anchor blocks to assemble and hold a plurality of framed modules in an array and to affix the array to a support, e.g., a roof or concrete pier;
(C) Separate structural backsheet that can be integrated with a junction box and electrical terminal function;
(D) Hollow or solid ribs on the separate structural backsheet;
(E) Backsheet rib pattern that is vertical and/or horizontal and/or wave and/or oblique and/or grid;
(F) Separate structural backsheet laminated to the solar cell array panel;
(G) Assembly requires sliding the solar cell array panel into one or more frame rails;
(H) Frame rail comprises a channel with which to engage the structural backsheet;
(I) Cross anchor block comprises a snap fit to engage and hold the module and/or a step that creates a space between the PV module and support, e.g., roof, concrete pier, etc.
(J) Integration of the snap fits of the corner connector and cross anchor blocks with the electrical terminal function to plug and play between the PV modules to provide electrical connection between and among the modules, e.g., upon pushing down on the PV module into the cross anchor block, an electrical connection is created such that current can pass from one module to another; and
(K) The plastic of the frame is thermoplastic or thermoset, and it has the Young's modulus from 1.5 MPa to 30 MPa.

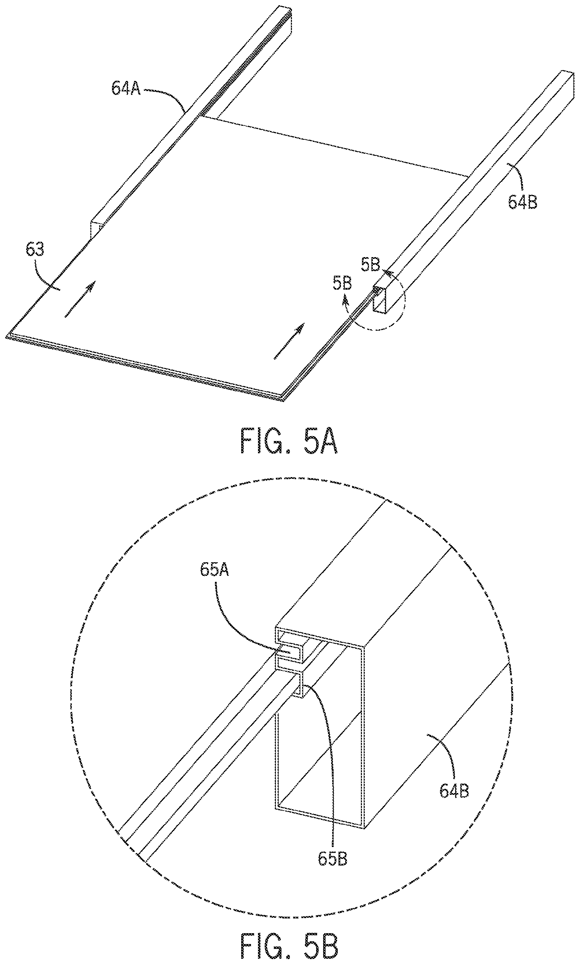

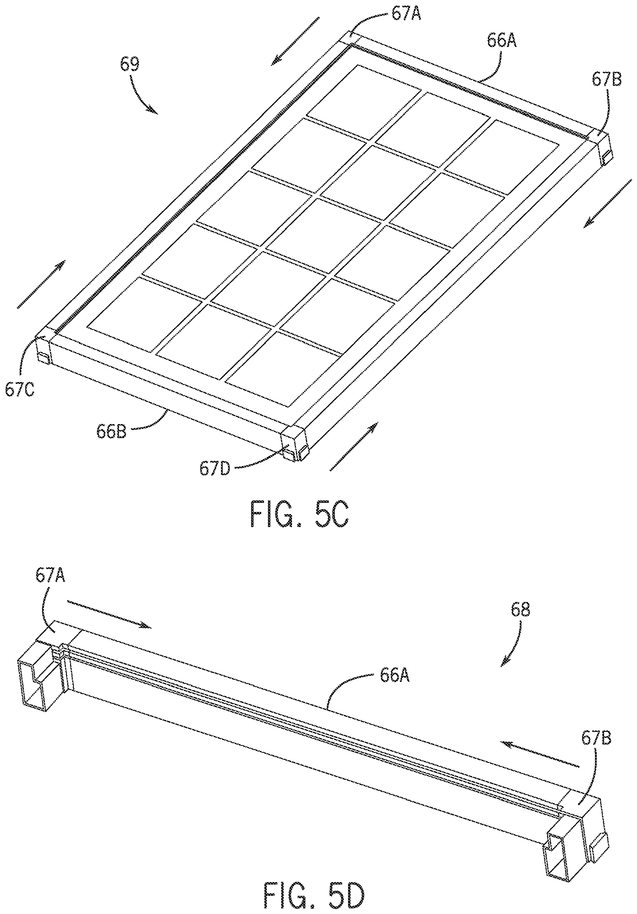

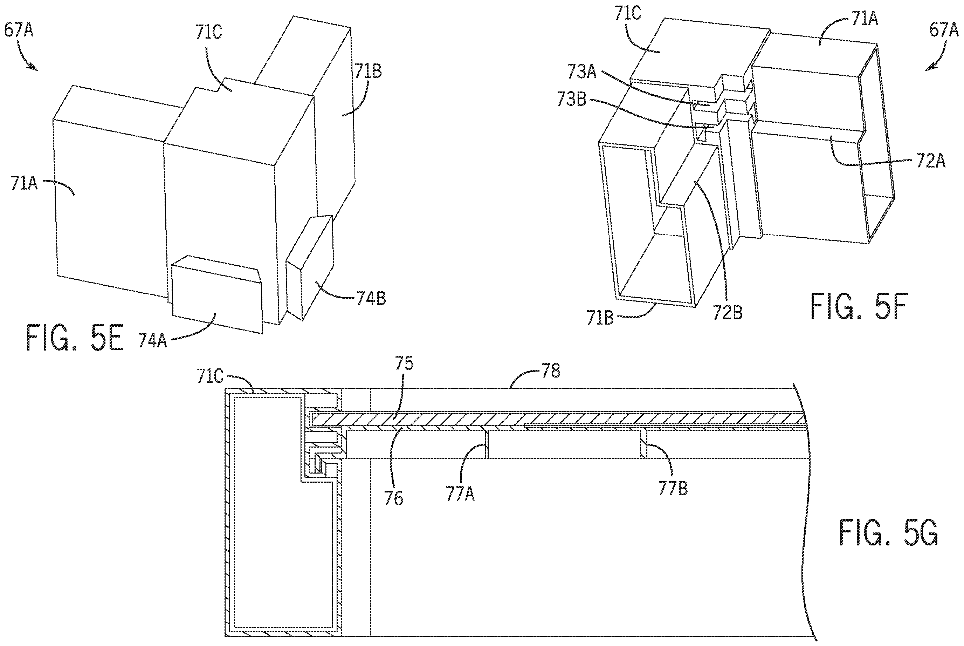

Figures 5A-D illustrate this embodiment of the invention. As a first step, the solar cell panel is constructed by laminating a sheet comprising an array of solar cells to a structural back sheet. In one embodiment the structural back sheet comprises ribs or reinforcing structures (not shown) to impart strength to the sheet of solar cells to which it is laminated. Figure 5A shows the insertion of laminated solar cell panel 63 into straight side frame segments 64A and 64B. The laminated solar cell panel can, depending on the laminating process and size and shape of the solar cell panel and the structural sheet, have a single or double (or more) edges. In Figures 5A and 5B laminated solar cell panel 63 is shown with a double edge and as such, straight side frame segments 64A and 64B comprise double channels 65A and 65B in which to engage and hold the edges of laminated solar cell panel 63. Once side frame segments 64A and 64B are attached to the side edges of panel 63, then side frame segments 66A and 66B are attached to panel 63 (Figure 5C). Side frame segments 66A and 66B are structurally alike to side frame segments 64A and 64B except shorter in length although in one embodiment, not shown, they are of equal length and are joined together in the shape of a square. Before side frame segments 66A and 66B are attached to panel 63, each is first fitted with corner connectors 67A-D. These connectors are sized and shaped to snuggly engage and hold the ends of the side frame segments. Once the corner connectors are attached to the frame segments, then these assemblies (e.g., 68 in Figure 5D) are snap fitted to the panel and side frame segments to form framed panel 69 (Figure 5C). The side frame segments can be solid or hollow and if hollow, can be empty or filled. In one preferred embodiment, the side frame segments are hollow and filled with a solid, rigid (high modulus) foam (not shown). The foam inserts impart stiffness to the frame by increasing the frame stiffness to weight ratio and this, in turn, allows for the use of a smaller frame which, in turn, simplifies handling and installation.

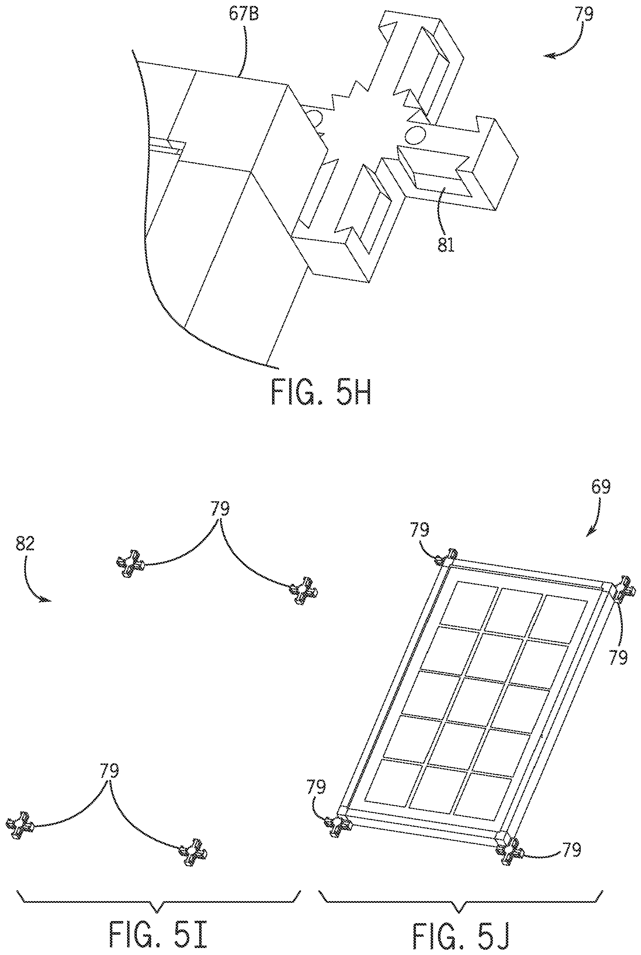

One embodiment of the corner connectors is more fully described in Figures 5E-G. Figures 5E-F illustrate outside and inside views, respectively, of corner connector 67A. Corner connector 67A comprises three main sections, a first arm 71A, a second arm 71B, and a central body 71C with the two arms extending from the body. Each arm is sized and shaped to firmly engage and hold an end of a side or edge frame, and comprises shelf 72A or 72B, respectively, upon which the bottom surface of the structural back sheet can rest. Central body 71C comprises channels 73A and 73B in which to engage and hold that part of the solar panel and structural back sheet not already engaged with the corresponding channels in the side and edge frames. On the outside of central body 71C are positioned insertion tabs 74A and 74B for engaging cross anchor blocks which are described in Figures 5H-J. The corner connectors are typically comprise a single, molded piece of plastic, and generally all corner connectors in a solar panel array are same in composition and structure. Like the straight side frame segments, the corner connectors can be solid or hollow and if hollow, can be empty or filled. In one preferred embodiment, the corner connectors are hollow and filled with a solid, rigid (high modulus) foam (not shown). The foam inserts impart stiffness to the connectors by increasing their stiffness to weight ratio and this, in turn, allows for the use of smaller connectors which, in turn, simplifies handling and installation.

Figure 5G provides a cut-away view of a corner connector engaged with an edge frame and laminated solar panel. In this view solar cell array panel 75 is laminated to structural back sheet 76 which comprises ribs 77A-B. The laminated solar panel is held within the channels of frame 78 the end of which and the end of the laminated solar panel are held within the corresponding channels of central body 71C.

Figures 5H-J illustrates the installment of a solar panel array of this embodiment on a roof top or similar structure. In Figure 5H anchor block 79 is engaged with corner connector 67B of solar panel 69. Anchor block 70 has the general shape of a cross each arm of which comprises a cavity (e.g., 81) sized and shaped to receive and firmly hold an insertion tab (e.g., 74A) of the central body of a corner connector. As illustrated in Figure 5H, the tab and cavity have the general shape of a trapezoid with the wider section against an arm of the cross to inhibit the disengagement of the corner connector from the anchor block without lifting the former out of the latter. The cavities on the anchor block for receiving the insertion tabs are positioned on the block so that a space is created beneath the solar panel and the surface upon which it is mounted so as to permit an air flow beneath the panel and thus promoting heat transfer from the panel to the environment.

In the installation of a solar panel array on a rooftop or other surface, first the anchor blocks are laid out in the desired pattern (e.g., Figure 5I), and then the solar panel assembly is simply snapped into place by positioning each corner of the panel into an anchor block, and the applying pressure at each corner of the panel to snap-fit the panel into the receiving quadrant of the block (Figure 5J). Although a typical solar panel array takes the form of a standard grid, the array can take any desired configuration, e.g., triangular, diamond, circular, etc.

### Fourth Embodiment: PV Module Frame

In one embodiment of the invention, PV module comprises an angle corner connector. This connector imparts good strength and stiffness and a clean look to the PV module while affording easy assembly of the module.

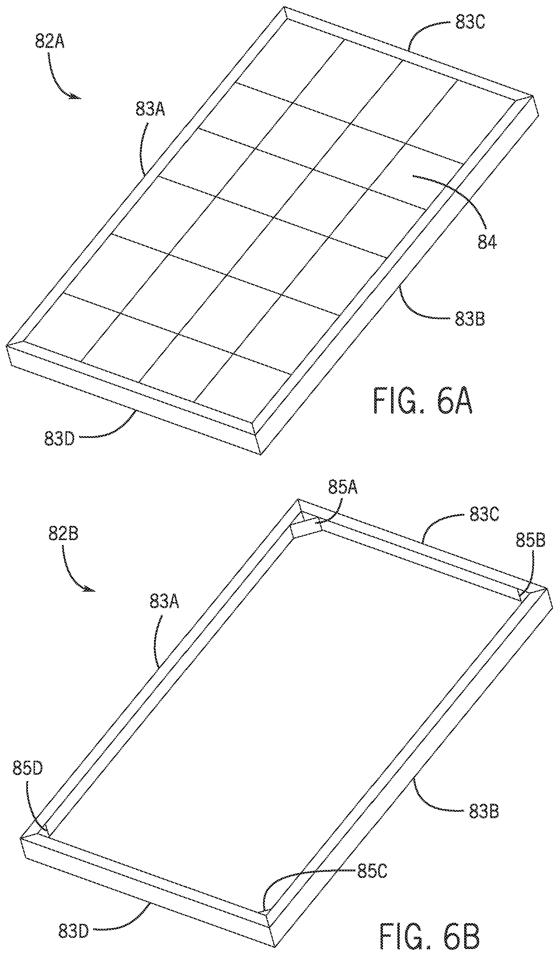

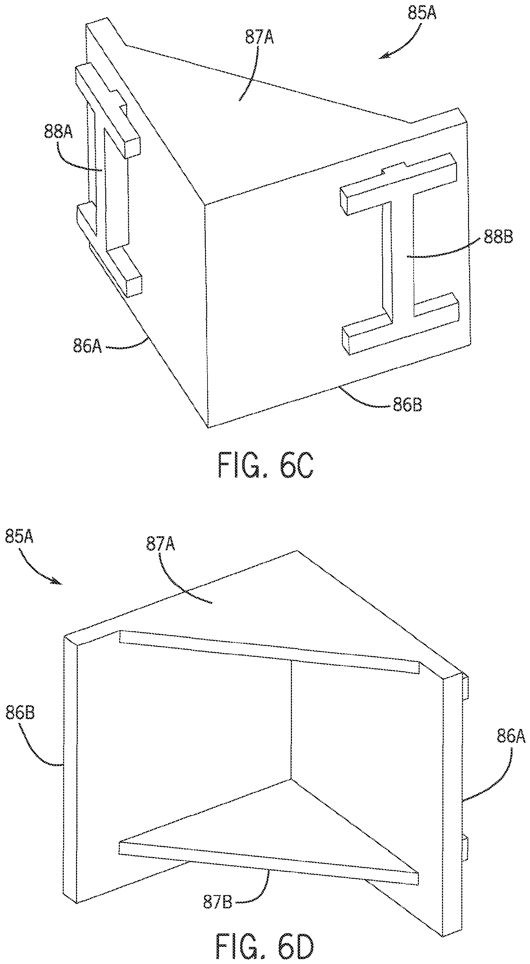

This embodiment is illustrated in Figures 6A-I. Figure 6A shows PV module front side 82A which comprises frame sections 83A-D and solar cell array 84. Figure 6B shows PV module rear side 82B which comprises frame sections 83A-D and corner connectors 85A-D.

All of the corner connectors of any given PV module are essentially alike is size, shape and function. As shown in Figures 6C-D, the corner connector, e.g., 85A, is L-shaped with first and second legs 86A-B joined by right angle sections 87A-B. On the exterior surface of each leg (Figure 6C) is embossed or otherwise carried a tab (88A, 88B) for joining the connector to a frame section. As shown in Figure 6C, the tabs are I-shaped although other tab shapes, e.g., cross (+), plus/minus sign (±), can also be employed. The crossbars of the tabs are spaced apart from the connector leg on which it is carried, and the tab is typically and preferably smaller in size then the leg upon which it is carried.

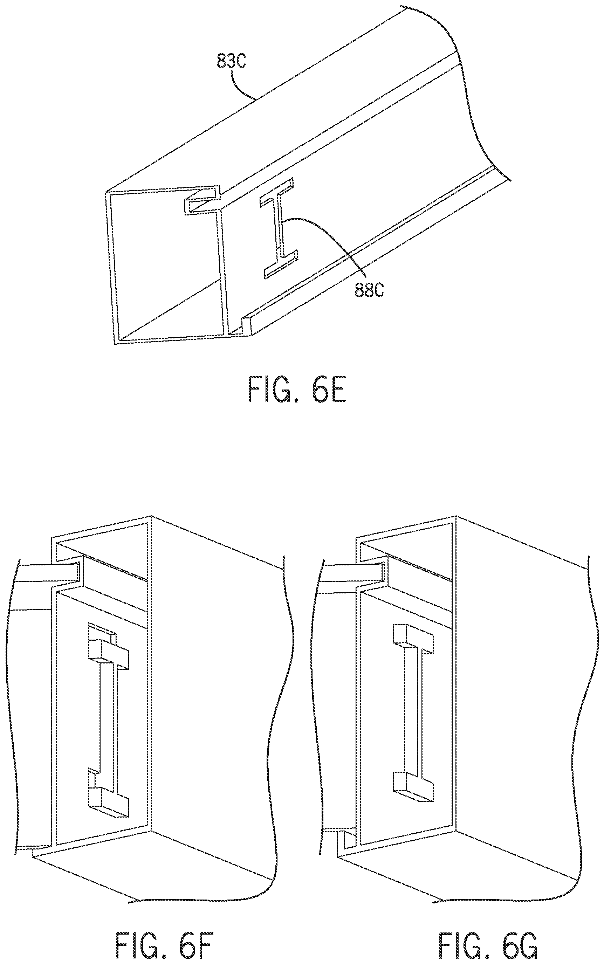

The tabs on the connectors are sized and shaped to be received and held by a section of frame. Each frame section has two slots or other apertures (one on each end) that correspond in size and shape with a tab of the connector (e.g., Figure 6E, slot 88C) with the length of the slot longer than the length of the tab so as to allow the tab upon insertion into the slot to be moved in a downward direction so that the crossbars of the tab are no longer in alignment with the crossbars of the slots. The tabs on each connector can be of the same size and shape, or of a different size and/or shape, typically and preferably of the same size and shape.

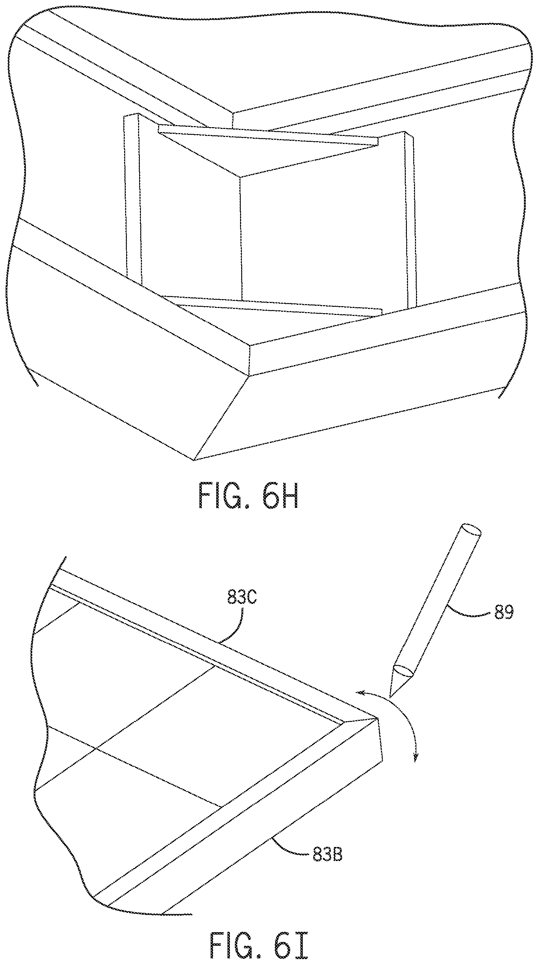

Figures 6F-H illustrate the manner in which the corner connectors couple or join two sections of the PV module frame. Figure 6F shows that the tab is inserted into a corresponding slot, and Figure 6G shows that the tab is then slid down the slot so that the crossbars of the tab no longer align with the crossbars of the slot so as to lock the tab in place against the frame. This procedure is repeated with a frame section to be joined to the frame section to which the connector is already attached to form connect the two frame sections into a PV module corner as show in Figure 6H.

Once the PV module corner is formed by the joining of two frame sections, e.g., 83B and 83C, with a corner connector (inside frames 83B and 83C and thus not shown), and typically after the PV module solar array panel and structural backsheet, if any, have been inserted into the frame, the outer sides of the corner seams are welded together using laser 89 or similar tool (Figure 6I).

### Fifth Embodiment: PV Module Frame

In one embodiment of the invention, the PV module comprises a frame structure with hinge and snap-fit features. The module is characterized by (i) a one-molded part frame with an integrated hinged frame cover, (ii) an edge step on the frame edges to support a solar cell array panel, (iii) snap-fit covers, and (iv) an integrated junction box on a frame edge. The hinged frame cover snap fits with the frame bottom, it can be unitary or multi-segmented, and if unitary, i.e., a single molded part, then it can either be molded with the frame or separate from the frame. The design of this embodiment can result in bending strength better than that of multi-part structures, reduced assembly complexity and time, reduced manufacturing costs relative to the separate manufacture of cover and frame, and assist in securing the solar panel array to the frame.

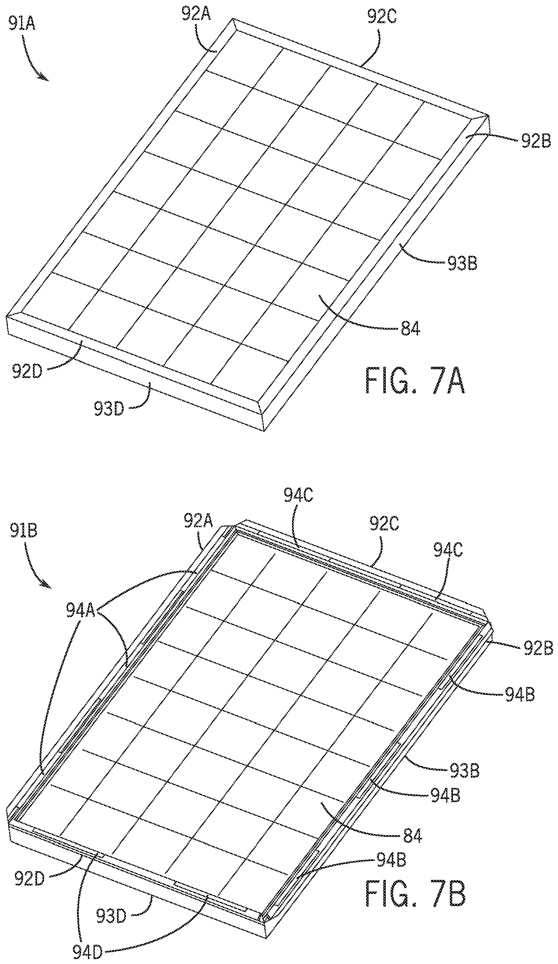

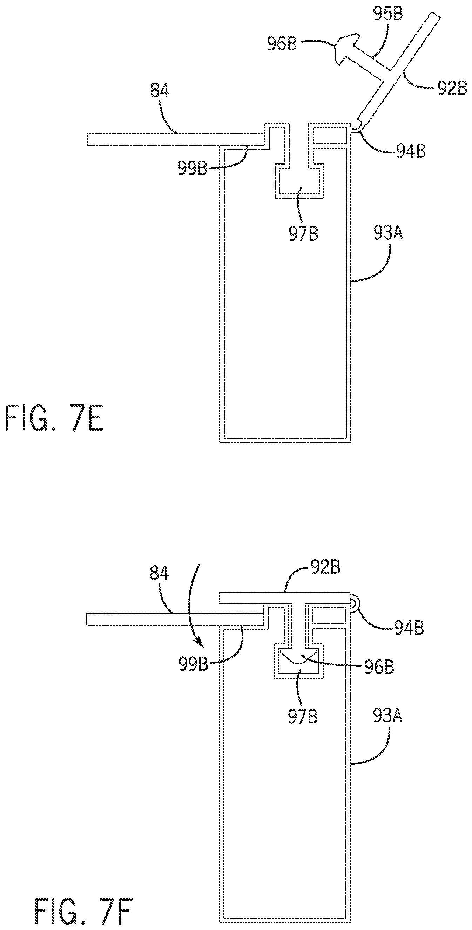

Figures 7A-B illustrate an integrated PV module of this embodiment having a hinge and snap-fit construction. Figure 7A shows assembled (closed) PV module 91A comprising solar cell array panel 84. Hinged top frame covers 92A-D are closed over frame bottoms 93A-D (93A and 93C not shown). Figure 7B shows the disassembled (open) PV module 91B with top frame covers 92A-D open, hinge sets 94A-D, and frame bottoms 93A-D (93A and 93C not shown).

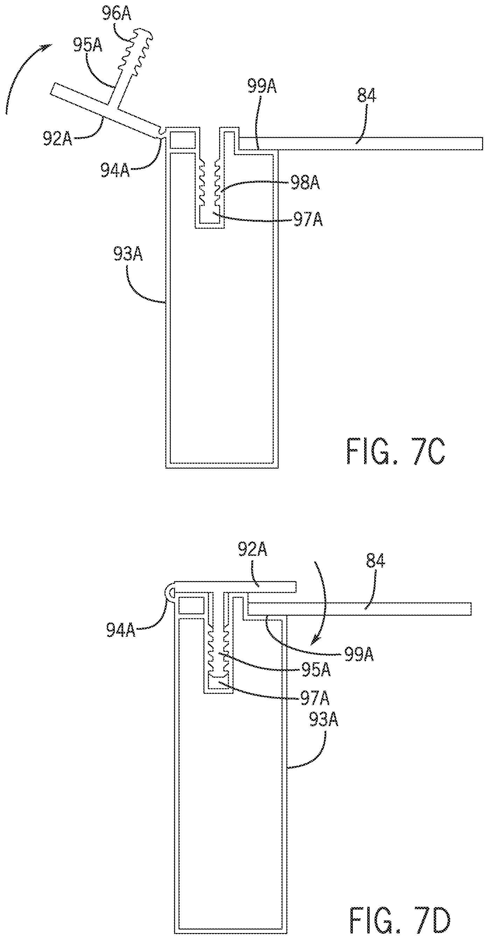

Figures 7C-D are exemplary of one embodiment of the frame/cover snap-fit. Figure 7C shows a frame cover/bottom frame open assembly. Frame cover 92A is equipped with plunger 95A which is equipped with fingers 96A. Plunger 95A is sized, shaped and placed on frame cover 92A so it can enter well 97A and fingers 96A can engage fingers 98A which are located within well 97A. Fingers 96A and 98A are shaped, sized and placed on plunger 95A and well 97A, respectively, so that when frame cover 92A is closed over frame bottom 93A, the fingers interlock to hold plunger 95A firmly within well 97A. Frame bottom 93A comprises shelf or ledge 99A upon which an edge of solar cell array panel 84 can rest, and frame cover 92A is sufficiently long that when closed over frame bottom 93A it (frame cover 92A) extends over the edge of solar cell array panel 84 resting on shelf 99A. Frame cover 92A is connected to frame bottom 93A by hinge 94A. Figure 7D shows the frame cover 92A/frame bottom 93A construction in an assembled or closed state.

Figures 7E-F show an alternate embodiment to Figures 7C-D. In this alternate embodiment fingers 96A on plunger 95A are replaced with plunger head 96B on plunger 95B. The shape of well 97A is changed to well 97B which is sized, shaped and located on frame bottom 93B to accept and hold plunger head 96B. Alternative plunger and well shapes can be used in the practice of this invention.

Assembly of PV module 91A is easy and quick. Bottom frames 93A-D can be molded as a single integrated piece or as separate pieces assembled into the desired configuration in any convenient manner such as those described elsewhere in this specification. Frame covers 92A-D can also be molded as part of a single integrated construction with frame bottoms 93A-D (a preferred construction with the frame covers hinged to the frame bottoms), or the frame covers can be molded in separate pieces which are separately attached during the construction process (in this embodiment, hinges are not part of the construction). Assembly is simply placing a solar cell array panel sized to the frame onto the frame bottom such that each edge of the panel rests on a corresponding frame edge, and then closing the frame covers over these edges of the panel such that the plunger enters and engages its corresponding well. In one embodiment of this invention, one or more of frame bottoms 93A-D comprises an integrated junction box as further described in this specification.

### Sixth Embodiment: PV Module Frame

In one embodiment of the invention, the PV module is manufactured by a blow molding process. This process allows for the manufacturing of hollow parts with complex shapes, allows for the integration of structural backsheets and junction boxes, and provides a high stiffness to weight ratio (which will reduce the weight, and thus cost, of the module).

The process of this embodiment comprises the steps of filling a thermoplastic olefin (TPO) with long glass fiber to produce a high rigidity, low shrink composite. The TPO composite is compounded with additives including, but not limited to, UV-stabilizers, pigments or dyes, antioxidants and nucleating agents. The TPO composite may also contain filler which emits energy *via* radiation to ensure that the PV module emits heat during operation and thus maximizing cell efficiency. These cooling particles can comprise silicon carbide, silicon dioxide and the like.

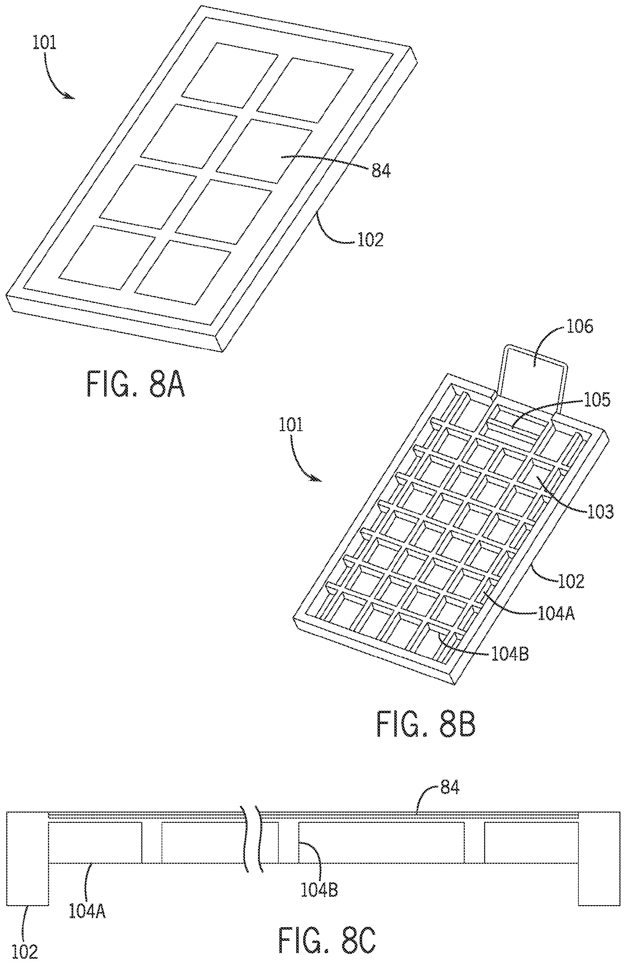

The TPO composite is extruded using conventional blow molding equipment and conditions to produce an integrated frame and backsheet such as that described in Figures 8A-C. The solar cell array panel is then inserted into the frame, and an elastomeric sealant is applied to ensure a waterproof system.

Figure 8A shows the front side of PV module 101 comprising blow molded, hollow plastic frame 102 upon which solar cell array panel 84 rests. The panel is sealed in place on the frame with an elastomeric sealant (not shown) which is applied on the seam formed by the edges of the panel and frame.

Figure 8B shows the rear side of PV module 101 comprising plastic frame 102 with integrated backsheet 103 and integrated junction box 105 with integrated junction box cover 106. The backsheet comprises integrated length ribs 104A and integrated width ribs 104B. As here used, "integrated" means that all components, i.e., frame, backsheet with ribs, junction box and cover, are part of a single, molded article as opposed to separate pieces otherwise attached to one another.

Figure 8C shows a crosscut section of the PV module of Figure 8A. As seen in this figure, plastic frame 102, and both length and width ribs 104A and 104B, respectively, are hollow.

### Injection Molding Process to Produce an Over-Molded Frame

The PV module can be produced using an over-molding process. The process is one-step and produces a frame with better sealing performance. The PV module, frame and/or process are characterized by one or more of the following features:
(A) The module comprises (1) a back support, (2) a front support, (3) an absorber layer between the front support and the back support, and (4) an integrated frame surrounding the back and front supports and the absorber layer such that the frame is integrated with (i) the back support; and (ii) an interlayer between the integrated frame and the lamination;
(B) The frame is made *via* a one-step, over molding process;
(C) The frame is a single, integrated molded part and thus it simplifies the assembly of the module;
(D) The frame is integrated with a structural plastic back sheet;
(E) The frame is integrated with the junction box and/or electrical terminal box;
(F) The frame is integrated with the junction box cover;
(G) The frame does not require adhesive to seal its edges, and thus provides a better seal for the module cell;
(H) The interlayer is thermoplastic or thermoset and has a certain coefficient of linear thermal expansion (CLTE) that matches with the over molding material and lamination material;
(I) The interlay is laminated with the front support and the absorber layer, or it is bonded with the front support and the absorber layer by an adhesive; and/or
(J) The plastic of the frame is thermoplastic or thermoset, and it has the Young's modulus from 1.5 MPa to 30 MPa.

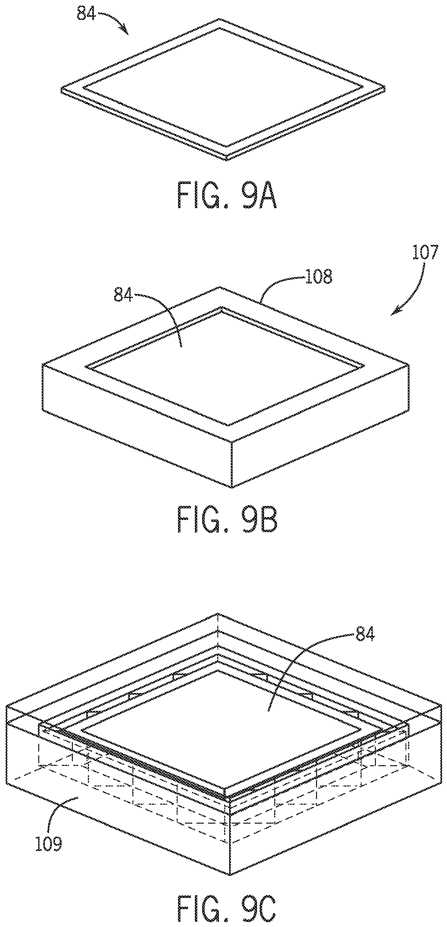

Figures 9A-F describe one embodiment of this invention. Figure 9A shows solar cell array panel 84. This panel can comprise one or a plurality of solar cells, and it can be a mono- or multilayer construction. Figure 9B shows finished module 107 comprising panel 84 over-molded with plastic frame 108.

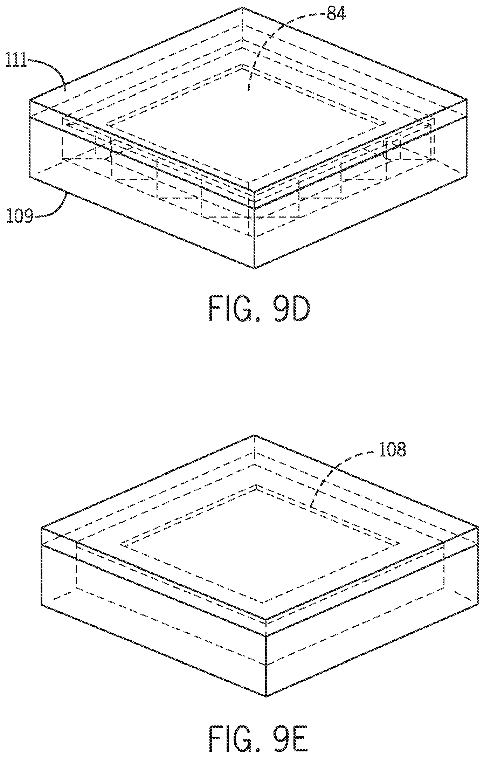

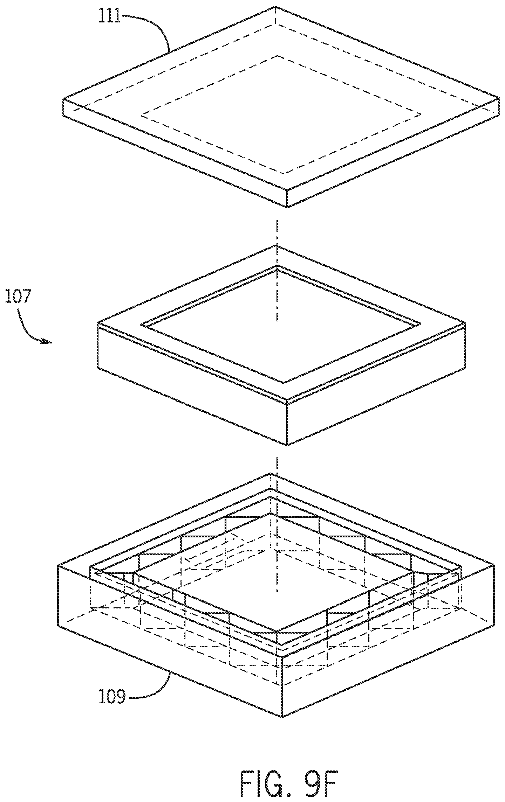

Figure 9C shows solar cell panel 84 within mold bottom109, and Figure 9D shows the panel-in-the-mold of Figure 9C with mold cover 111 in place to cover panel 84. Figure 9E shows the closed mold of Figure 9D after the plastic has been injected to form over-molded plastic frame 108. Figure 9F is an exploded view showing finished product 107 de-molded from mold cover 111 and mold bottom 109.

### Seventh Embodiment: PV Module Frame

In one embodiment of the invention, the mounting rack of the PV module is integrated into the module itself. This design results in installation savings of cost and time.

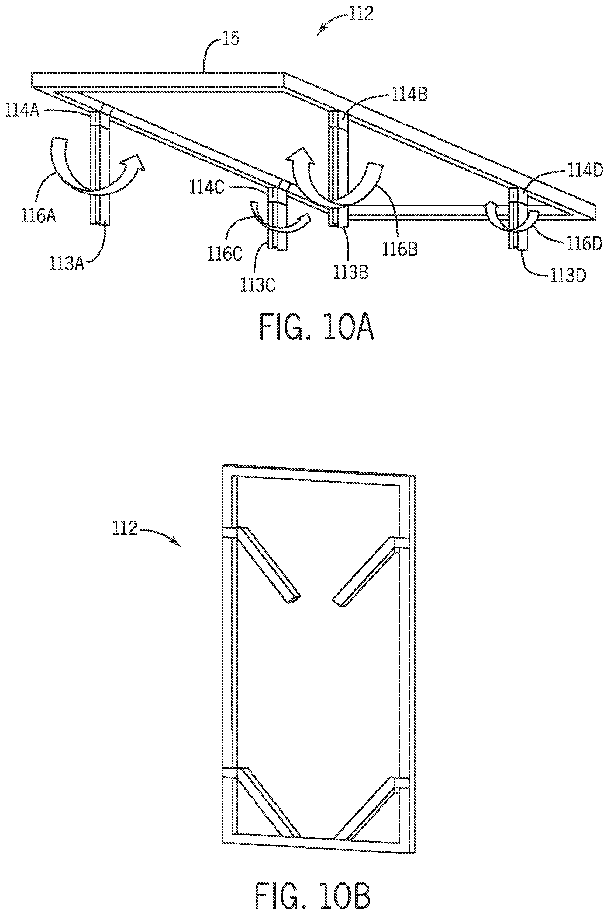

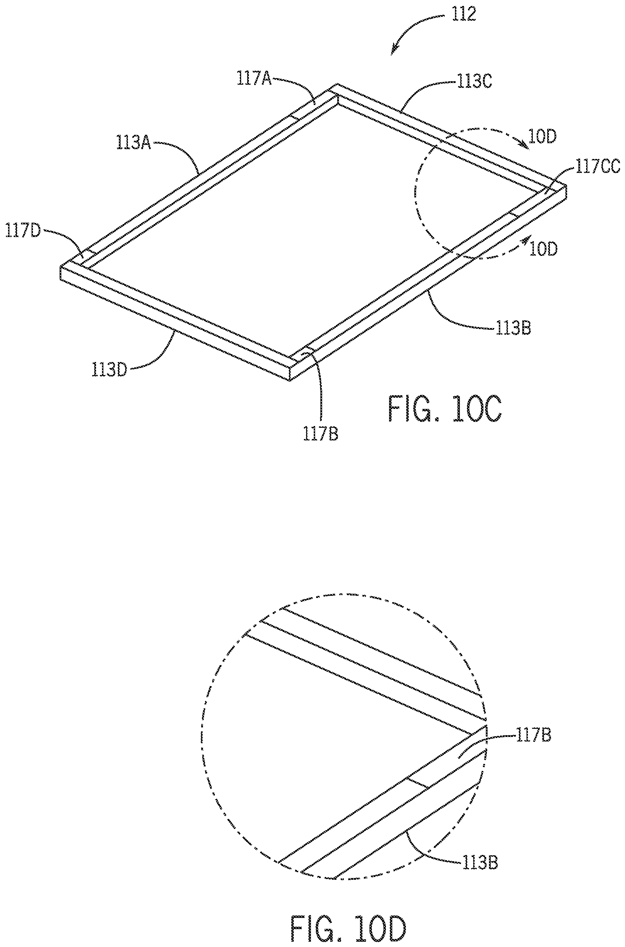

Figures 10A-F show several variations on a PV module with an integrated rack. Figure 10A shows module 112 with extended rack legs 113A-D attached to frame 115 by hinges 114A-D, respectively. Rack legs 113A-B are longer than rack legs 113C-D to provide a slant to module 112 so as to optimize its exposure to the sun. The difference in the length between legs 113A-B and 113C-D can vary widely. The hinges have a releasable lock feature (not shown) to hold the rack legs in their extended or folded position but which can be released when the legs are to be moved from one position to another.. Arrows 116A-D show the direction in which the legs are moved to fold them into the back of module 112, and Figure 10B shows the module with legs folded into its rear side. The configuration of the module in Figure 10B lends itself well to storage and shipping, and the swing-out nature legs make for easy installation on a roof or pier.

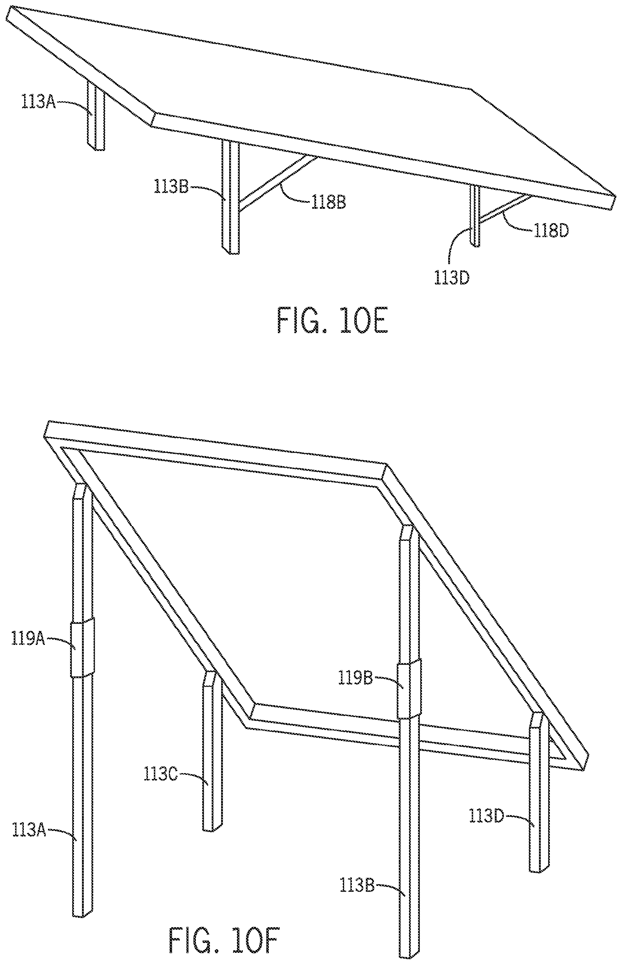

Figures 10C-E show another variation of this embodiment. Figures 10C-D show rack legs 113A-D folded into channels 117A-D, respectively, of frame 115 as opposed to out of frame 115 and against the back of the module 112. Figure 10E shows the extended legs locked into place with side arms 118B and 118D (side arms A and C not shown). The legs and side arms are equipped with hinges (not shown) to allow the legs to be folded into the frame channels.

Figure 10F shows another variation in which rear rack legs 113A-B are telescopic in construction to allow adjustment to their respective heights. The legs of this design are equipped with means 119A-B, respectively, to lock the legs at a desired height. These means include, but are not limited to, snapping sleeves, peg and holes, and various constriction constructs, e.g., twisting rings.

### Eighth Embodiment: PV Module Frame

In one embodiment of the invention, the PV module is characterized by a one-piece, integrated frame with a closeable entry on one edge through with a solar panel assembly can be inserted. The frame provides four-edge support for the assembly, and the entry port through which the assembly is inserted into the frame can be closed and sealed, typically with a snap-fit lid.

The PV module is characterized by one or more of the following features:
(A) A solar panel assembly comprising a back support, a front support and an absorber layer between the front support and the back support with one frame surrounding the assembly;
(B) One-piece, integrated molded frame;
(C) A junction box integrated into the frame;
(D) An entry on one end of the frame through which the assembly can be inserted into the frame;
(E) The entry into the frame can be closed with a sealing block or lid with a snap-fit closure, and the lid can be hinged to the frame or detachable from the frame; and
(F) A sealant position between the closed lid of the frame and the inserted assembly, the sufficient sealant typically applied after the assembly has been inserted into the frame and before the lid is closed.

The sufficient sealant is applied to securely close the lid over the inserted assembly. In one embodiment the sealant also serves as an adhesive between the upper and lower portions of the frame. The composition of the sealant is not critical to the practice of this invention.

The composition of the frame can also vary to convenience, and can be either a thermoplastic or thermoset material. Typically the material from which the frame is formulated has a Young's modulus of 1.5 MPa to 30 MPa, and the modulus can be enhanced by including fiber (e.g., glass fiber, carbon fiber, etc.) into the formulation. The composition can be enhanced with various additives such as antioxidants, UV stabilizers, pigments, dyes, nucleating agents, flame retardant agents and the like. The composition can also can one or more fillers to ensure that the module emits heat during operation and maximizes cell efficiency. These fillers include silicon carbide, silicon dioxide, boron nitride and the like.

With the one-molded part design, the PV module frame of this embodiment provides good resistance to bending/flexing and reduces assembly of the module with the integrated junction box and easy insertion of the solar panel assembly.

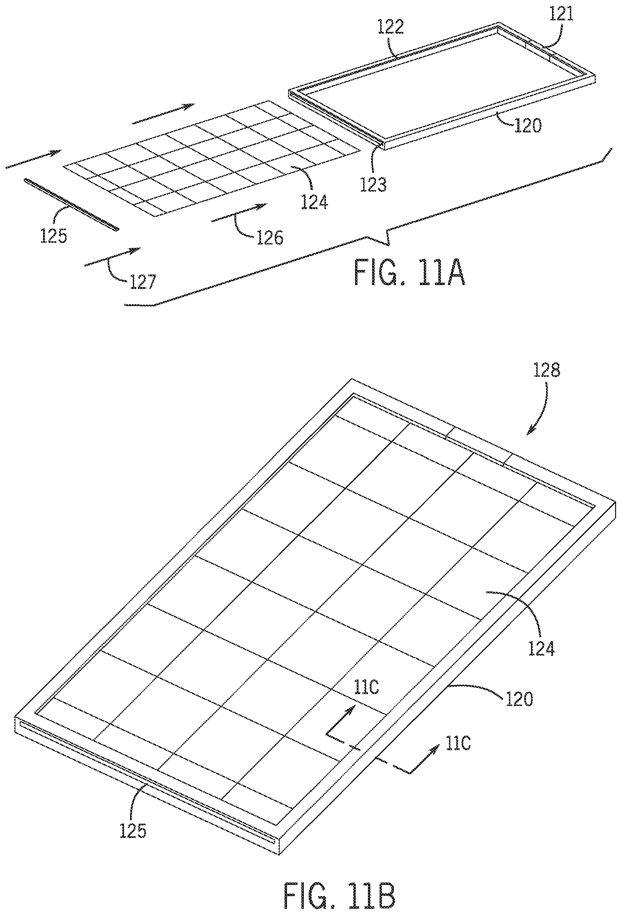

Figure 11A is an exploded view of one PV module assembly of this embodiment of the invention. PV module frame 120 is an integrated, single molded piece comprising integrated junction box 121, track 122 and entry port 123. Track 122 and entry port 123 are sized and shaped to receive and hold solar panel assembly 124. In the assembly of the PV module, solar panel assembly 124 is inserted as shown by motion arrows 125 into and through entry port 123 such that the edges of the panel engage and are held by track 122. Once the assembly is within the frame, then a sealant (not shown) is applied over the entry port and sealing block (or lid) is inserted into it as shown by motion arrows 126. Assembled PV module 127 is shown in Figure 11B.

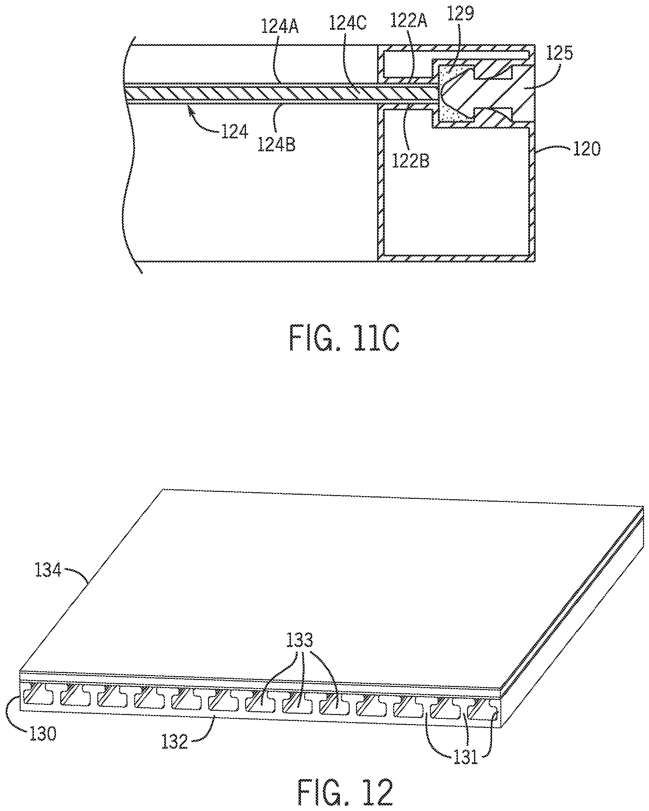

Figure 11C illustrates the sealing block inserted into the frame, and the solar panel assembly. Solar panel assembly 124 comprises front or top support 124A, back or bottom support 124B and absorber panel (i.e., solar cell array) 124C. The assembly fits snugly into and is carried by track 122 which is defined by upper and lower track surfaces 122A and 122B, respectively. Track surfaces 122A-B are sized and shaped to securely engage sealing block 125 in a snap-fit closure with sealant 129 positioned between the outer edges of assembly 124 and sealing block 125.

### Ninth Embodiment: PV Module

In one embodiment of the invention, the PV module is characterized by a back panel comprising a bottom skin and a plurality of spaced apart supporting legs. The legs are attached to the bottom surface of photovoltaic laminate in a manner that creates open channels or chimneys that assist in the cooling of the PV module. Figure 12 shows an example of the back panel.

The PV module is characterized by one or more of the following features:
(A) The back panel comprises a bottom skin and a plurality of spaced apart supporting legs. Typically the back panel is a single, integrated molded plastic piece. The back panel is attached to the PV laminate by adhering, e.g., gluing, the legs to the bottom surface of photovoltaic laminate.
(B) The back panel is typically made with fiber reinforced polymer. The fiber can be glass fiber, carbon fiber, basalt fiber, Kevlar fiber, high strength polymeric fibers in rovings, mats braids or woven fabric and/or a combination of two or more of these. The bottom skin can be designed to give maximum stiffness and strength with optimal material usage. For example, the exterior layer of the bottom skin can be made with fiber mat or woven fiber reinforced polymer.
(C) The back panel can be made by an extrusion process. If a continuous fiber or fiber mat is incorporated into the back panel, then it can also be made by pultrusion.
(D) The channels or chimneys formed by the attachment of the pack panel to the photovoltaic laminate act as vents which can remove heat from the photovoltaic module, typically with more efficiency than that of conventional PV module constructions. With the ability to operate at lower temperatures, the PV module can produce electrical power more efficiently.
(E) The channel at a module edge can hold a small, thin junction box, and the edge leg can be machined to make holes to allow electrical or other cables to pass through the edge leg for connection with the junction box or other PV module structure.
(F) The skin of some channels can be thicker than others to allow for making holes or locking mechanisms for module fixation purposes.
(G) The back panel can be made sufficiently strong to reduce or eliminate rack usage in some applications, and/or to reduce the front glass plate thickness.
(H) The width of the individual channels of the back panel can vary. For example, smaller width channels can be used at the module edges to increase support for the PV laminate edges, while larger width channels can be used in the interior to increase venting capacity.

Figure 12 illustrates an exploded view of a PV module of this embodiment. Back panel 130 comprises a back skin 132 with a plurality of integral legs 131 spaced apart to form a plurality of channels or chimneys 133. Legs 131 are typically and preferably of the same size (height, length and thickness) and shape but their number can vary to convenience. The spacing of the legs, one from the other, can also vary and thus the size of the channels can vary, one from the other. Back panel 131 is attached to PV laminate 134 by any convenient method, typically by applying an adhesive to the top of each leg and then contacting the legs with the PV under sufficient temperature and pressure and for a sufficient length of time to allow the adhesive to cure.

### Lamination Process

Multiple PV module layers can be laminated to an integrated frame and structural backsheet in a single step. The multiple PV module layers comprise a top transparent polymer or glass layer, an encapsulated layer, and a silicon layer. The encapsulated layer typically comprises a polymer such as ethylene vinyl acetate (EVA). The lamination is conducted in a laminating device and under pressure or vacuum conditions. After lamination an adhesive, e.g., silicon rubber, is applied to seal the edges of the solar cell layers.

Multiple PV module encapsulant processing includes the steps of placing a sheet of material onto glass, and then placing onto it pre-sorted and connected solar cells. Another layer of sheet encapsulant is then placed on top of this, followed by a final structural backsheet integrated with a module frame on the back of the solar panel. The completed laminate is then placed into a laminator machine, which is heated to an optimum temperature to melt the encapsulant material. In one embodiment an over-pressure is applied to the laminate to facilitate the lamination process. In one embodiment a vacuum is then applied to remove any air bubbles trapped during the heating process, resulting in a sealed solar cell array that is bonded to a glass surface. This process laminates the structural backsheet with frame onto the cell layers together to shorten the cycle time of module assembly process.

The resulting laminated product exhibits improved bending strength relative to PV products made conventionally. This one-step process of joining the PV lamination to the frame reduces the assembly process of the finished product, i.e., the PV module. With the inclusion of ribs on the backsheet, the PV module exhibits desirable bending and twisting stiffness and strength. In one preferred embodiment a junction box is integrated into the back sheet structure.

### EXAMPLES

### Raw Materials

Table 1 reports the materials used in these examples.

**Table 1**

| Materials of Inventive Examples 1-2 and Comparative Examples 1-2 | |
|---|---|
| Raw material | Vendor |
| YUPLENE™ SK B391G | Korea SK |
| Long glass fiber | Shanghai Jieshijie |
| ENGAGE 8200 | Dow Chemical Company |
| Mg(OH)₂ | Shandong Luhua |
| Intumescent FR system 50A-2 | Shandong Xurui |
| Cabot PLASBLAK® UN2014 | Shanghai Wenyuan Chem. |
| IRGANOX 1010 | Ciba |
| IRGANOX 1024MD | Ciba |
| DSTDP | ICE |
| Cyasorbâ UV-3529 | Cytec |
| DPO-BSA/1010(Azide) | Dow Chemical Company |

| | |
|---|---|
| YUPLENE™ SK B391G is a propylene impact copolymer for injection molding. ENGAGE 8200 is an ethylene/1-octene elastomer having a density of 0.87 g/cm³ and an I₂ of 5. FR System 50A-2 is a mixture of ammonium polyphosphate and pentaerythritol used as flame retardant. Cabot PLASBLAK™ UN2014 is a 50 wt% carbon black filled polyethylene masterbatch. IRGANOX 1010 is Pentaerythritol tetrakis(3-(3,5-di-tert-butyl-4-hydroxyphenyl) propionate), a high molecular weight phenolic antioxidant with low volatility. IRGANOX MD 1024 is 2',3-bis[[3-[3,5-di-tert-butyl-4-hydroxyphenyl]propionyl]] proponiohydrazine. DSTDP is distearylthiodipropionate, stearyl 3,3'-thiodipropionate. CYASORBA UV-3529 is a UV stabilizer, 1,6-hexanediamine,N1,N6-bis(2,2,6,6-tetramethyl-4-piperidinyl)-, polymers with morpholine-2,4,6-trichloro-1,3,5-triazine reaction products, methylated (CAS NO.193098-40-7). DPO-BSA/1010 (Azide) is a mixture of 4,4'-oxybisbenzenesulfonyl azide and IRGANOX 1010. | |

### Compounding Process

### Preparation of FR Masterbatch

FR additive, antioxidant, UV-stabilizer, color masterbatch, ENGAGE 8200 and SK B391G are premixed in a high speed mixer at 900 revolutions per minute (rpm) for 3 minutes. The mixture is fed into the main feed port of an ZSK40 extruder (L/D=48). The screw speed is set at 250 rpm, and the barrel temperature is 190-200°C. The feed rate is 30 kilograms per hour (kg/h). The nitrogen inlet is used on the second zone to protect the material during compounding. Vacuum is open to remove the volatiles. The strands are cooled by water then cut into pellets.

### Preparation of Glass Fiber/IPP Masterbatch

The PP resin and DPO-bisulphonyl azide coupling agent at 400∼800 ppm) and glass fiber with weight ratio 50:50 are fed into the main port of the ZSK40 (L/D=48) extruder according to the formulation. Glass fiber is fed into the vent port at zone 5. The screw speed is set at 250 rpm, and the barrel temperature at 190-200°C. The feed rate is 40 kg/h. Vacuum is open to remove the volatiles. The strands are water cooled and then cut into pellets.

### Injection Molding

GF reinforced IPP masterbatch pellets and FR masterbatch with at a weight ratio 50:50 are fed an into injection molding apparatus. The barrel temperature is set at 70°C, 190°C, 200°C, 200°C, and 200°C. The mold temperature is 30°C. ASTM standard test specimens for mechanical, electrical and FR tests are injection molded on a FANUC machine.

### Testing

### Mechanical Performance

Tensile strength and flexural strength testing are conducted by an INSTRON 5565 according to ASTM D638.

Izod Impacted Strength testing is conducted on a CEIST 6960 according to ASTM D256.

### UL94

The UL94 vertical flammability testing is conducted by a UL94 chamber according to ASTM D 3801.

### UV Exposure

The 1000 hour UV exposure is conducted by a QUV from Q-lab according to IEC61215.

### Results

Table 2 reports the performance for different glass fiber reinforced IPP composites. The addition of intumescent FR system 50A-2 improves the FR performance dramatically. With 20% 50A-2 (Invention Example 1), the composite can achieve UL94 V-0 (3.2mm), and shows a good balance for mechanical performance and weather resistance compared to Comparative Example 1. With 25% 50A-2 (Invention Example 1), the composite can achieve UL94 V-0 (1.6mm). In contrast, with 40% Mg(OH)₂ (Comparative Example 2) the composite fails the UL94 V-0(3.2mm) testing.

**Table 2**

| Comparative Testing Results of Glass Fiber Composites | | | | | |
|---|---|---|---|---|---|
| Raw material | | Comparative Ex. 1 | Comparative Ex. 2 | Invention Ex. 1 | Invention Ex. 2 |
| SK B391G | | 0.58 | 0.18 | 0.4 | 0.35 |
| ENGAGE 8200 | | 0.1 | 0.1 | 0.1 | 0.1 |
| Intumescent FR system 50A-2 | | | | 0.2 | 0.25 |
| Mg(OH)2 | | | 0.4 | | |
| Cabot PLASBLAK® UN2014 | | 0.04 | 0.04 | 0.04 | 0.04 |
| IRGANOX 1010 | | 0.02 | 0.02 | 0.002 | 0.002 |
| DPO-BSA/1010 | | 0.0005 | 0.0005 | 0.0005 | 0.0005 |
| DSTDP | | 0.007 | 0.007 | 0.007 | 0.007 |
| Cyasorba UV-3529 | | 0.003 | 0.003 | 0.003 | 0.003 |
| Long glass fiber | | 0.25 | 0.25 | 0.25 | 0.25 |
| Performance | | | | | |
| FR UL94 V-0(3.2mm) | | Fail | Fail | Pass | Pass |
| FR UL94 V-0(1.6mm) | | Fail | Fail | Fail | Pass |
| Mechanical performance | Testing condition | | | | |
| Tensile strength/Mpa | 23°C | 54.6 | NA | 54.2 | NA |
| Flexural strength/Mpa | 23°C | 82 | NA | 84.9 | NA |
| Izod impact strength/(J/M) | 23°C (Notched) | 191 | NA | 180 | NA |
| Weather resistance-UV | after 1000h UV | | | | |
| Tensile strength/Mpa | 23°C | 54.3 | NA | 53.18 | NA |
| Flexural strength/Mpa | 23°C | 81.8 | NA | 84.7 | NA |
| Izod impact strength/(J/M) | 23°C (Notched) | 190 | NA | 168 | NA |

## Claims

1. A solar panel assembly (31) comprising a:
(A) PV module (54) comprising one or more PV cells within a plastic frame, and the frame comprising plastic front (35A, 35B) and rear base attachments (35C, 35D), the front base attachments (35A, 35B) pivotally attached to the frame of the PV module (54) and the rear base attachments (35C, 35D) slideably engaged with the frame of the PV module (54);
(B) Plastic base comprising two spaced apart mounting bases (38A, 38B) joined together by a connector board (39), each mounting base (38A, 38B) equipped with plastic front pegs (45A, 45B) to pivotally engage the front base attachments (35C, 35D) of the frame of the PV module (54), and rear slots (47B) engaged in a snap-fit relationship with the rear base attachments (35C, 35D) of the PV module (54);
(C) Plastic wind deflector (36) engaged in a snap-fit relationship with each of the two rear base attachments (35C, 35D);
(D) Plastic junction box (56A-D) integral with the PV module frame; and
(E) Two plastic self-aligning devices (57A-D) for joining adjacent PV modules (54) to one another, each device (57A-D) integral with the PV module frame.

2. The solar panel assembly (31) of Claim 1 in which the junction box (56A-D) comprises a first part that is integral with one of the self-aligning devices (57A-D) and a second part that is integral with the other self-aligning devices (57A-D).

3. The solar panel assembly (31) of Claim 1 in which the junction box (56A-D) is separate from the self-aligning devices (57A-D).

4. The solar panel assembly (31) of Claim 1 in which one or more of (1) the frame of the PV cells, (2) the plastic base, (3) the plastic wind deflector (36), (4) the plastic junction box (56A-D), and (5) the plastic self-aligning devices (57A-D) are made from a composition comprising (A) a thermoplastic polymer, (B) a reinforcing element, (C) a non-halogen containing, intumescent flame retardant, (D) an impact-modifier, (E) a coupling agent, and, optionally, (F) one or more additives.

5. The solar panel assembly (31) of Claim 4 in which the composition comprises, based on the weight of the composition, (A) 10-80 wt% of a thermoplastic polymer, (B) 10-55 wt% of a reinforcing element, (C) 1-30 wt% of a non-halogen containing, intumescent flame retardant, (D) 1-20 wt% of an impact-modifier, (E) 0.001-0.5 wt% of a coupling agent, and, optionally, (F) one or more additives.

6. The solar panel assembly (31) of Claim 4 or 5 in which the thermoplastic polymer is an impact-modified polypropylene, the reinforcing element is glass fiber, the non-halogen containing, intumescent flame retardant is an organic phosphorus-based compound, the impact modifier is a polyolefin elastomer other than the IPP of (A), and the coupling agent is a bis(sulfonyl azide).

7. The solar panel assembly (31) of Claim 1 in which the plastic PV module frame is **characterized by** (A) a unitary molded or over-molded part, (B) an L-shape (55), (C) a two-piece junction box (56A-D) with one piece located on one side of the frame and the other piece located opposite and on the other side of the frame; (D) a self-alignment device (57A-D), and (E) at least one structural member (58A-B) on the back of the panel to provide mechanical strength to the panel.

8. The solar panel assembly (124) of Claim 1 in which the PV module comprises:
(A) a back support (124B), a front support (124A) and an absorber layer (124C) between the front support (124A) and the back support (124B);
(B) A one-piece, integrated molded frame (120) surrounding the module;
(C) A junction box (121) integrated into the frame (120);
(D) An entry (123) on one end of the frame (120) through which the module can be inserted into the frame (120);
(E) A sealing block (125) or lid over the entry (123) and engaged with the frame (120) in a snap-fit relationship; and
(F) A sealant (129) position between the lid of the frame (120) and the inserted module.

## Patentansprüche

1. Eine Solarpaneelanordnung (31), die Folgendes beinhaltet:
(A) ein PV-Modul (54), das eine oder mehrere PV-Zellen innerhalb eines Kunststoffrahmens beinhaltet, und wobei der Rahmen vordere (35A, 35B) und hintere Sockelbefestigungen (35C, 35D) aus Kunststoff beinhaltet, wobei die vorderen Sockelbefestigungen (35A, 35B) schwenkbar an dem Rahmen des PV-Moduls (54) befestigt sind und die hinteren Sockelbefestigungen (35C, 35D) einschiebbar mit dem Rahmen des PV-Moduls (54) in Eingriff stehen;
(B) einen Kunststoffsockel, der zwei voneinander beabstandete Montagesockel (38A, 38B) beinhaltet, die durch eine Verbinderplatte (39) zusammengefügt sind, wobei jeder Montagesockel (38A, 38B) mit vorderen Kunststoffstiften (45A, 45B) ausgestattet ist, um schwenkbar in die vorderen Sockelbefestigungen (35C, 35D) des Rahmens des PV-Moduls (54) einzugreifen, und mit hinteren Schlitzen (47B), die in einer eingerasteten Beziehung mit den hinteren Sockelbefestigungen (35C, 35D) des PV-Moduls (54) in Eingriff stehen;
(C) einen Kunststoffwindabweiser (36), der in einer eingerasteten Beziehung mit jeder der zwei hinteren Sockelbefestigungen (35C, 35D) in Eingriff steht;
(D) eine Abzweigdose (56A-D) aus Kunststoff, die in den PV-Modulrahmen integriert ist; und
(E) zwei Selbstausrichtungsvorrichtungen (57A-D) aus Kunststoff zum Aneinanderfügen benachbarter PV-Module (54), wobei jede Vorrichtung (57A-D) in den PV-Modulrahmen integriert ist.

2. Solarpaneelanordnung (31) gemäß Anspruch 1, wobei die Abzweigdose (56A-D) eine erste Komponente, die in eine der Selbstausrichtungsvorrichtungen (57A-D) integriert ist, und eine zweite Komponente, die in die anderen Selbstausrichtungsvorrichtungen (57A-D) integriert ist, beinhaltet.

3. Solarpaneelanordnung (31) gemäß Anspruch 1, wobei die Abzweigdose (56A-D) von den Selbstausrichtungsvorrichtungen (57A-D) getrennt ist.

4. Solarpaneelanordnung (31) gemäß Anspruch 1, wobei eines oder mehrere von (1) dem Rahmen der PV-Zellen, (2) dem Kunststoffsockel, (3) dem Kunststoffwindabweiser (36), (4) der Abzweigdose (56A-D) aus Kunststoff und (5) den Selbstausrichtungsvorrichtungen (57A-D) aus Kunststoff aus einer Zusammensetzung gefertigt sind, die Folgendes beinhaltet: (A) ein thermoplastisches Polymer, (B) ein Verstärkungselement, (C) ein nicht halogenhaltiges, dämmschichtbildendes Flammschutzmittel, (D) einen Schlagzähmodifizierer, (E) einen Haftvermittler und optional (F) ein oder mehrere Additive.

5. Solarpaneelanordnung (31) gemäß Anspruch 4, wobei die Zusammensetzung bezogen auf das Gewicht der Zusammensetzung Folgendes beinhaltet: (A) zu 10-80 Gew.-% ein thermoplastisches Polymer, (B) zu 10-55 Gew.-% ein Verstärkungselement, (C) zu 1-30 Gew.-% ein nicht halogenhaltiges, dämmschichtbildendes Flammschutzmittel, (D) zu 1-20 Gew.-% einen Schlagzähmodifizierer, (E) zu 0,001-0,5 Gew.-% einen Haftvermittler und optional (F) ein oder mehrere Additive.

6. Solarpaneelanordnung (31) gemäß Anspruch 4 oder 5, wobei das thermoplastische Polymer ein schlagzähmodifiziertes Polypropylen ist, das Verstärkungselement Glasfaser ist, das nicht halogenhaltige, dämmschichtbildende Flammschutzmittel eine organische Verbindung auf Phosphorbasis ist, der Schlagzähmodifizierer ein von dem IPP von (A) verschiedenes Polyolefinelastomer ist und der Haftvermittler ein Bis(sulfonylazid) ist.

7. Solarpaneelanordnung (31) gemäß Anspruch 1, wobei der PV-Modulrahmen aus Kunststoff durch Folgendes gekennzeichnet ist: (A) eine geformte oder umspritzte Komponente in einem Stück, (B) eine L-Form (55), (C) eine zweiteilige Abzweigdose (56A-D), wobei ein Teil auf einer Seite des Rahmens befindlich ist und der andere Teil gegenüberliegend und auf der anderen Seite des Rahmens befindlich ist, (D) eine Selbstausrichtungsvorrichtung (57A-D) und (E) mindestens ein strukturelles Bauteil (58A-B) auf der Rückseite des Paneels, um dem Paneel mechanische Festigkeit zu verleihen.

8. Solarpaneelanordnung (124) gemäß Anspruch 1, wobei das PV-Modul Folgendes beinhaltet:
(A) einen rückseitigen Träger (124B), einen vorderen Träger (124A) und eine absorbierende Schicht (124C) zwischen dem vorderen Träger (124A) und dem rückseitigen Träger (124B);
(B) einen einteiligen, integrierten geformten Rahmen (120), der das Modul umgibt;
(C) eine Abzweigdose (121), die in den Rahmen (120) integriert ist;
(D) einen Eingang (123) an einem Ende des Rahmens (120), durch den das Modul in den Rahmen (120) eingesetzt werden kann;
(E) einen Versiegelungsblock (125) oder Deckel über dem Eingang (123) und in einer eingerasteten Beziehung mit dem Rahmen (120) in Eingriff stehend; und
(F) eine Versiegelung (129), die zwischen dem Deckel des Rahmens (120) und dem eingesetzten Modul positioniert ist.

## Revendications

1. Un ensemble panneau solaire (31) comprenant :
(A) un module PV (54) comprenant une ou plusieurs cellules PV au sein d'un cadre en plastique, et le cadre comprenant des fixations de base avant (35A, 35B) et de derrière (35C, 35D) en plastique, les fixations de base avant (35A, 35B) étant fixées de manière pivotante au cadre du module PV (54) et les fixations de base de derrière (35C, 35D) étant engagées de manière coulissante avec le cadre du module PV (54) ;
(B) une base en plastique comprenant deux bases de montage espacées l'une de l'autre (38A, 38B) reliées ensemble par une carte de connexion (39), chaque base de montage (38A, 38B) étant équipée de chevilles avant en plastique (45A, 45B) afin de s'engager de manière pivotante avec les fixations de base avant (35C, 35D) du cadre du module PV (54), et de fentes de derrière (47B) engagées dans une relation d'encliquetage avec les fixations de base de derrière (35C, 35D) du module PV (54) ;
(C) un déflecteur de vent en plastique (36) engagé dans une relation d'encliquetage avec chacune des deux fixations de base de derrière (35C, 35D) ;
(D) une boîte de jonction en plastique (56A-D) solidaire du cadre de module PV ; et
(E) deux dispositifs d'autoalignement en plastique (57A-D) pour relier des modules PV adjacents (54) entre eux, chaque dispositif (57A-D) étant solidaire du cadre de module PV.

2. L'ensemble panneau solaire (31) de la revendication 1 dans lequel la boîte de jonction (56A-D) comprend une première partie qui est solidaire d'un des dispositifs d'autoalignement (57A-D) et une deuxième partie qui est solidaire des autres dispositifs d'autoalignement (57A-D).

3. L'ensemble panneau solaire (31) de la revendication 1 dans lequel la boîte de jonction (56A-D) est séparée des dispositifs d'autoalignement (57A-D).

4. L'ensemble panneau solaire (31) de la revendication 1 dans lequel un ou plusieurs éléments parmi (1) le cadre des cellules PV, (2) la base en plastique, (3) le déflecteur de vent en plastique (36), (4) la boîte de jonction en plastique (56A-D), et (5) les dispositifs d'autoalignement en plastique (57A-D) sont fabriqués à partir d'une composition comprenant (A) un polymère thermoplastique, (B) un élément de renforcement, (C) un retardateur de flamme intumescent ne contenant pas d'halogène, (D) un modificateur de la résistance au choc, (E) un agent de couplage et, facultativement, (F) un ou plusieurs additifs.

5. L'ensemble panneau solaire (31) de la revendication 4 dans lequel la composition comprend, rapporté au poids de la composition, (A) 10 à 80 % en poids d'un polymère thermoplastique, (B) 10 à 55 % en poids d'un élément de renforcement, (C) 1 à 30 % en poids d'un retardateur de flamme intumescent ne contenant pas d'halogène, (D) 1 à 20 % en poids d'un modificateur de la résistance au choc, (E) 0,001 à 0,5 % en poids d'un agent de couplage, et, facultativement, (F) un ou plusieurs additifs.

6. L'ensemble panneau solaire (31) de la revendication 4 ou 5 dans lequel le polymère thermoplastique est un polypropylène à résistance au choc modifiée, l'élément de renforcement est une fibre de verre, le retardateur de flamme intumescent ne contenant pas d'halogène est un composé organique à base de phosphore, le modificateur de la résistance au choc est un élastomère de polyoléfine autre que l'IPP de (A), et l'agent de couplage est un bis(azoture de sulfonyle).

7. L'ensemble panneau solaire (31) de la revendication 1 dans lequel le cadre de module PV en plastique est **caractérisé par** (A) une partie unitaire moulée ou surmoulée, (B) une forme en L (55), (C) une boîte de jonction à deux morceaux (56A-D), un morceau étant situé sur un côté du cadre et l'autre morceau étant situé à l'opposé et sur l'autre côté du cadre ; (D) un dispositif d'autoalignement (57A-D), et (E) au moins un élément structurel (58A-B) sur l'arrière du panneau afin de fournir une résistance mécanique au panneau.

8. L'ensemble panneau solaire (124) de la revendication 1 dans lequel le module PV comprend :
(A) un support arrière (124B), un support avant (124A) et une couche absorbante (124C) entre le support avant (124A) et le support arrière (124B) ;
(B) un cadre moulé intégré à un seul morceau (120) entourant le module ;
(C) une boîte de jonction (121) intégrée dans le cadre (120) ;
(D) une entrée (123) sur une extrémité du cadre (120) par laquelle le module peut être inséré dans le cadre (120) ;
(E) un bloc d'étanchéité (125) ou couvercle par-dessus l'entrée (123) et engagé avec le cadre (120) dans une relation d'encliquetage ; et
(F) un joint d'étanchéité (129) positionné entre le couvercle du cadre (120) et le module inséré.
